# EUROPÄISCHE PATENTSCHRIFT

(11) **EP 1 438 383 B1**
(45) Veröffentlichungstag und Bekanntmachung des Hinweises auf die Patenterteilung: **04.04.2007**
(21) Anmeldenummer: 02782938.1
(22) Anmeldetag: 17.10.2002
(51) Int. Cl.: C11D 11/02

(54) **VERFAHREN ZUR HERSTELLUNG VON WASCH- UND REINIGUNGSMITTELN**
METHOD FOR PRODUCING DETERGENT COMPOSITIONS
PROCEDE POUR LA PRODUCTION DES COMPOSITIONS DETERGENTES

(30) Priorität: 25.10.2001 DE 10152161
(43) Veröffentlichungstag der Anmeldung: 21.07.2004
(60) Teilanmeldung: 05022854.3
(73) Patentinhaber: Henkel Kommanditgesellschaft auf Aktien, 40589 Düsseldorf (DE)
(72) Erfinder: RÄHSE, Wilfried, 40589 Düsseldorf (DE); KRUSE, Hans-Friedrich, 41352 Korschenbroich (DE); BLASEY, Gerhard, 40599 Düsseldorf (DE); DICOI, Ovidiu, 40789 Monheim (DE); ARTIGA GONZALEZ, Rene-Andres, 40589 Düsseldorf (DE)
(74) Vertreter: Stevermann, Birgit
(86) Internationale Anmeldenummer: PCT/EP2002/011623
(87) Internationale Veröffentlichungsnummer: WO 2003/035818

(56) Entgegenhaltungen:
- EP-A- 0 057 611
- WO-A-01/83071
- WO-A-92/05849
- US-A- 4 006 110
- US-A- 4 849 125
- US-B1- 6 294 512

## Beschreibung

Die vorliegende Erfindung betrifft ein Verfahren zur Herstellung feinkörniger Wasch- oder Reinigungsmittel.

Sprühgetrocknete Wasch- oder Reinigungsmittel sind aus dem Stand der Technik seit langer Zeit bekannt. Nachteilig ist diesen Mitteln, daß sie üblicherweise ein relativ breites Kornspektrum mit Teilchengrößen bis oberhalb 1000 µm aufweisen, während gleichzeitig auch Staubanteile mit Teilchengrößen unterhalb 100 µm vorhanden sind. Die gröberen Teilchen können durch Agglomeration der Primärpartikel entstehen. Sie können mikroskopisch als Partikel mit himbeerartigen Strukturen identifiziert werden. Staubanteile sind aus den bekannten Gründen nicht wünschenswert. Sprühtrocknungsprodukte weisen aber üblicherweise nicht nur ein sehr uneinheitliches Kornspektrum auf, auch das Schüttgewicht ist in hohem Maße von dem Kornspektrum abhängig. So wiesen direkte Sprühtrocknungsprodukte in der Vergangenheit im allgemeinen ein Schüttgewicht von 200 bis 400 g/l auf. Durch Veränderung der Sprühtrocknungsbedingungen und der Inhaltsstoffe der sprühzutrocknenden Zusammensetzungen konnten im Laufe der Jahre auch höhere Schüttgewichte bis etwa 600 g/l erhalten werden, wobei durch Nachbehandlung der direkten Sprühtrocknungsprodukte entweder mit flüssigen Bestandteilen wie nichtionischen Tensiden oder durch weitere Aufagglomeration und Verdichtung auch höhere Schüttgewichte erzielt werden konnten. Wurden durch Absieben der gröberen Partikel feinteilige, gegebenenfalls auch noch Staub aufweisende Wasch- oder Reinigungsmittel erhalten, so konnten diese auch ohne Nachbehandlung ein Schüttgewicht von deutlich oberhalb 600 g/l, ja sogar von 700 g/l und mehr aufweisen. Feinteilige Sprühtrocknungsprodukte mit Schüttgewichten unterhalb von 500 g/l sind aus dem Stand der Technik bisher nicht bekannt.

Vorrichtungen zur Sprühtrocknung lösungsmittelhaltiger Zusammensetzungen, insbesondere wasserhaltiger Zusammensetzungen, sind aus dem Stand der Technik bekannt. Häufig verwendete Vorrichtungen sind beispielsweise Sprühtürme mit Zerstäuberdüsen, die insbesondere bei flüssigen Edukten (Lösungen, Suspensionen oder Schmelzen) zur Bereitstellung eines pulverförmigen Produktes eingesetzt werden. Hierbei wird die Flüssigkeit meist mit Druckdüsen zerstäubt und trocknet dann im Heißgas im Gleich- oder Gegenstrom. Anschließend wird das trockene Produkt durch Zyklone oder Filter abgeschieden. Wird eine Schmelze zerstäubt und im kalten Gas erstarrt, so spricht man von einem Prillturm.

Weitere bekannte Sprühtrockner sind Scheibentürme. Diese sind - wie auch die Düsentürme - Kurzzeittrockner. Sie verwenden zur Zerstäubung rotierende Scheiben und sind im Vergleich zum Düsenturm von gedrungener Bauform. Der Vorteil der Zerstäuberscheibe ist deren Unempfindlichkeit gegen Verstopfung der "Düsen" und stark veränderliche Flüssigkeitsdurchsätze.

Bekannt sind außerdem Sprühtrockner mit integriertem Wirbelbett. Durch den Einbau einer Wirbelschicht am Boden des Sprühturms kann das Produkt dort nachgetrocknet und gesichtet werden. Das Trocknungsgas mit dem Feinstaub wird beispielsweise im oberen Teil des Turmes am Turmkopf abgezogen und der Feinstaub nach der Abtrennung in den Turm zurückgeführt. Deshalb können auch vergleichsweise klebrige und langsam trocknende Edukte verarbeitet werden. Als Produkt werden gut dispergierbare Agglomerate erhalten, die größer und damit zumeist staubärmer als die Pulver der Düsen- und Scheibentürme sind.

Im weiteren Sinne gleichfalls zu den Sprühtrocknern zu zählen sind Wirbelschicht-Sprühgranulatoren ("Agglomerations-Trockner"), die der Herstellung von Granulaten im Bereich von 0,3 mm bis zu mehreren mm aus zerstäubbaren Lösungen, Suspensionen und Schmelzen dienen. Zur Zerstäubung werden Zweistoffdüsen eingesetzt. Das Produkt ist meist abriebfest und hat ein relativ hohes Schüttgewicht. Die Lösegeschwindigkeit ist deshalb, verglichen mit anderen Sprühprodukten, geringer. Ein solcher Granulator kann auch zum Beschichten von Granulaten benutzt werden, dann wird er meist diskontinuierlich betrieben.

Aus der WO 92/05849 A1 ist ein Verfahren zur Sprühtrocknung von Wertstoffen und Wertstoffgemischen unter Verwendung von überhitztem Wasserdampf bekannt. Der Einsatz überhitzten Wasserdampfes vermeidet oxidative Schädigungen des Trocknungsgutes.

Aus der WO 96/04973 A1 ist ein Verfahren zur Sprühtrocknung wasserhaltiger Wertstoffzubereitungen aus dem Bereich der Netz-, Wasch- oder Reinigungsmittel bekannt, das durch Einbringen eines pulver- oder puderförmigen Hilfsstoffes in den Innenraum der Sprühtrocknungszone Anbackungen an die Innenwand des Trockners vermeidet.

Die US 5,723,433 A beschreibt ein Verfahren zum Entfernen von Lösungsmitteln aus einer pastösen Tensidmasse, das umfaßt, die pastöse Masse unter Druck in einen Trocknungskanal einzuführen und am Einlaß des Kanals den Druck so abzusenken, daß es zu einer Entspannungsverdampfung (Flash-Verdampfung) bestimmter Komponenten der pastösen Masse kommt. Die pastöse Masse wird in dem Trocknungskanal erhitzt und durch die während der Entspannungsverdampfung freiwerdenden Gase durch den Kanal getrieben. Ergebnis des Verfahrens ist eine konzentrierte Tensidpaste, die am Auslaß des Trocknungskanals erhalten wird.

Die bekannten Verfahren zur Sprühtrocknung flüssiger oder pastöser Zusammensetzungen sind nachteiligerweise durch einen sehr hohen Energieverbrauch gekennzeichnet. Die eingesetzte Energie dient zu einem erheblichen Teil nicht der Lösungsmittelverdampfung, sondern der Deckung von Wärmeverlusten, die beispielsweise durch das warme Abgas entstehen.

Nachteilig ist außerdem, daß bei der Sprühtrocknung von Zusammensetzungen, die anfällig für mikrobielle Kontaminationen sind, die enthaltenen Mikroorganismen nicht zuverlässig abgetötet werden, da die Zusammensetzungen im Ansetzbehälter des Sprühtrockners meist nur für kurze Zeit und oft lediglich auf eine Temperatur von unter 100 °C erhitzt werden, um die enthaltenen Wertstoffe zu schonen. Auch wenn in einem sehr heißen Gasstrom getrocknet wird, sind die Partikel dem Heißgas nur Sekunden ausgesetzt, was zur Abtötung vieler unerwünschter Mikroorganismen nicht ausreicht.

Problematisch ist diese Keimbelastung insbesondere bei der Herstellung von Pulvern oder Granulaten, die in Lebensmitteln, Kosmetika oder Arzneimitteln Verwendung finden sollen. Erschwerend kommt hinzu, daß viele Mikroorganismen sich in dem getrockneten Produkt in Abwesenheit von Wasser zwar nicht mehr vermehren, aber auch nicht absterben, sondern extrem widerstandsfähige Dauerformen wie beispielsweise Sporen ausbilden. Das getrocknete Produkt ist folglich weder optisch noch olfaktorisch als kontaminiert zu erkennen; wird es jedoch wieder mit Wasser in Kontakt gebracht, beispielsweise in Wasser gelöst, kann es zu erheblichen Keimbelastungen kommen, wenn das Produkt nicht binnen weniger Stunden verbraucht wird.

Die internationale Patentanmeldung WO 99/29830 A1 (EP 0969082 A1) beschreibt feinteilige Wasch- oder Reinigungsmittel mit einer schnellen Auflösekinetik und einem mittleren Partikeldurchmesser von 150 bis 500 µm, welche ein Schüttgewicht von mindestens 500 g/l aufweisen. Wesentlich für die Herstellung dieser sprühgetrockneten Wasch- oder Reinigungsmittel ist, daß die sprühzutrocknende Zusammensetzung neben Tensiden, die enthalten sein können, und anorganischen sowie gegebenenfalls organischen Buildersubstanzen sowie gegebenenfalls weiteren üblichen Bestandteilen von Wasch- oder Reinigungsmitteln vor allem auch anorganische Inhaltsstoffe aufweisen, die nicht wasserlöslich sind. Dies hat den Nachteil, daß trotz der hohen Auflösekinetik, welche diese sprühgetrockneten Produkte aufweisen, bei der üblicherweise wässerigen Anwendung der Produkte wasserunlösliche Bestandteile zurückbleiben, welche sich auf den zu waschenden bzw. reinigenden Oberflächen niederschlagen können.

Dementsprechend bestand die Aufgabe der Erfindung darin, ein feinkörniges Wasch- oder Reinigungsmittel bereitzustellen, welches diese Nachteile nicht aufweist.

Diese Aufgabe wird erfindungsgemäß gelöst durch ein Verfahren gemäß Anspruch 1.

Bevorzugtes Produkt des erfindungsgemäßen Verfahrens ist ein feinkörniges Wasch- oder Reinigungsmittel, bestehend aus einem direkten Sprühtrocknungsprodukt, welches einen Partikeldurchmesser d50 im Bereich von 0,12 mm bis 0,6 mm und dabei ein Schüttgewicht im Bereich von lediglich 220 g/l bis maximal 500 g/l, vorzugsweise weniger als 500 g/l, aufweist.

Bevorzugtes Produkt des erfindungsgemäßen Verfahrens ist ebenfalls ein feinkörniges Wasch- oder Reinigungsmittel, welches ein direktes Sprühtrocknungsprodukt ist, Tenside, anorganische und gegebenenfalls organische Buildersubstanzen und gegebenenfalls weitere übliche Inhaltsstoffe enthält, wobei die enthaltenen anorganischen Bestandteile und insbesondere die anorganischen Buildersubstanzen jedoch wasserlöslich sind.

Im Rahmen der vorliegenden Erfindung wird unter einem direkten Sprühtrocknungsprodukt ein Produkt verstanden, welches durch Sprühtrocknung ohne weitere Nachbehandlung erhalten wird. Insbesondere im Hinblick auf die Feinteiligkeit des Produkts wird darauf verwiesen, daß sich die angegebenen Partikelgrößenverteilungen auf das direkte Sprühtrocknungsprodukt beziehen. Hier ist es besonders vorteilhaft, daß das Mittel ein in relativ hohem Ausmaß einheitliches Kornspektrum zeigt, ohne daß weitere übliche, aus dem Stand der Technik bekannte Nachbehandlungen wie Zerkleinern und/oder Absieben von größeren Bestandteilen bzw. Absieben von Staubanteilen erforderlich sind. Derartige Maßnahmen führen in einer großtechnischen Produktion immer zu einer Komplexierung des Verfahrens, womit meist eine Verringerung der Produktausbeute und damit einer Verteuerung des Produkts einhergeht. Außerdem ist es auch aus sicherheitstechnischen Gründen (Verfahrenssicherheit und gesundheitliche Gründe) eindeutig von Vorteil, Staubanteile von vornherein bei der Herstellung zu minimieren, anstatt sie anschließend eliminieren zu müssen.

Vorteilhafterweise sind die Mittel sowohl nach der Herstellung als auch nach ihrer Lagerung frei fließend, das heißt sie klumpen nicht, und stauben nicht. Vorzugsweise weisen die frei fließenden Mittel im Klumptest (Beschreibung siehe weiter unten) eine Note von kleiner 30, vorzugsweise von kleiner 20 und insbesondere von kleiner 10 auf. Ganz besonders bevorzugt sind Mittel, welche im Klumptest eine Note von kleiner 5 erhalten.

Mit Vorzug liegt der Partikeldurchmesser d50 einer Siebanalyse, bezogen auf Gew.-%, der direkten Sprühtrocknungsprodukte im Bereich von 0,12 mm, vorzugsweise von 0,14 mm, bis 0,6 mm. Dabei sind insbesondere Partikeldurchmesser d50 im Bereich von 0,17 mm bis 0,4 mm, unter weiterer

Bevorzugung von Partikelgrößen d50 von 0,19 bis 0,28 mm, besonders bevorzugt. Von besonderem Vorteil sind dabei direkte Sprühtrocknungsprodukte, welche zu mindestens 90 Gew.-% eine Partikelgröße (d90) von 0,3 mm bis 0,8 mm und vorzugsweise von 0,35 mm bis 0,55 mm aufweisen. Insbesondere bevorzugt sind dabei direkte Sprühtrocknungsprodukte, welche zu höchstens 10 Gew.-% eine Partikelgröße (d10) von maximal 0,2 mm, insbesondere im Bereich von 0,12 bis 0,18 mm aufweisen. Schließlich sind direkte Sprühtrocknungsprodukte, welche zu höchstens 5 Gew.-% eine Partikelgröße unterhalb von 0,1 mm aufweisen, aus den genannten Gründen besonders wünschenswert.

Die Schüttgewichte der Mittel können in einem breiten Rahmen variieren. Jedoch ist es bevorzugt, daß die Schüttgewichte der direkten Sprühtrocknungsprodukte in einem Bereich von 220 g/l bis 500 g/l liegen, wobei ein Bereich von 250 g/l bis 480 g/l, beispielsweise von 270 g/l oder darüber, insbesondere bevorzugt ist. Schüttgewichte im Bereich von 300 bis 450 g/l sind noch einmal als besonders bevorzugt anzusehen. Mit besonderen Vorteilen behaftet sind dabei direkte Sprühtrocknungsprodukte, welche zu mehr als 90 Gew.-% und insbesondere zu mehr als 95 Gew.-% aus Partikeln mit einer Teilchengröße unterhalb von 0,8 mm und zu maximal 4 Gew.-% aus Partikeln unterhalb von 0,1 mm bestehen.

Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), z.B. die α-sulfonierten Methylester der hydrierten Kokos-, Palmkern- oder Taigfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Taigfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, die als Handelsprodukte der Shell Oil Company unter dem Namen DAN^{®} erhalten werden können, sind geeignete Aniontenside.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Der Gehalt der direkten Sprühtrocknungsprodukte an den genannten anionischen Tensiden beträgt vorzugsweise 2 bis 30 Gew.-% und insbesondere 5 bis 25 Gew.-%, wobei Konzentrationen oberhalb von 10 Gew.-% und sogar oberhalb von 15 Gew.-% besondere Bevorzugung finden.

Zusätzlich zu den genannten anionischen Tenside können Seifen enthalten sein. Geeignet sind insbesondere gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z.B. Kokos-, Palmkern- oder Talgfettsäuren, abgeleitete Seifengemische. Der Gehalt der direkten Sprühtrocknungsprodukte an Seifen beträgt vorzugsweise nicht mehr als 3 Gew.-% und insbesondere 0,5 bis 2,5 Gew.-%.

Die anionischen Tenside und Seifen können in Form ihrer Natrium-, Kalium- oder Ammoniumsalze sowie als lösliche Salze organischer Basen, wie Mono-, Di- oder Triethanol-amin, vorliegen. Vorzugsweise liegen sie in Form ihrer Natrium- oder Kaliumsalze, insbesondere in Form der Natriumsalze vor. Anionische Tenside und Seifen können auch in situ hergestellt werden, indem in die sprühzutrocknende Zusammensetzung die Aniontensidsäuren und gegebenenfalls Fettsäuren eingebracht werden, welche dann durch die Alkaliträger in der sprühzutrocknenden Zusammensetzung neutralisiert werden.

Nichtionische Tenside sind üblicherweise in direkten sprühgetrockneten Produkten - wenn überhaupt - nur in untergeordneten Mengen vorhanden. Beispielsweise kann ihr Gehalt bis zu 2 oder 3 Gew.-% betragen. Zur genaueren Beschreibung der nichtionischen Tenside wird auf die Beschreibung der nachbehandelten Sprühtrocknungsprodukte weiter unten verwiesen.

Weitere Inhaltsstoffe des direkten Sprühtrocknungsprodukts sind anorganische und gegebenenfalls organische Buildersubstanzen. Zu den anorganischen Buildersubstanzen gehören auch Inhaltsstoffe wie Aluminosilikate und insbesondere Zeolithe. Der eingesetzte feinkristalline, synthetische und gebundenes Wasser enthaltende Zeolith ist vorzugsweise Zeolith A und/oder P. Als Zeolith P wird beispielsweise Zeolith MAP^{(R)} (Handelsprodukt der Firma Crosfield) besonders bevorzugt. Geeignet sind jedoch auch Zeolith X sowie Mischungen aus A, X und/oder P. Von besonderem Interesse ist auch ein cokristallisiertes Natrium/Kalium-Aluminiumsilikat aus Zeolith A und Zeolith X, welches als VEGOBOND AX^{®} (Handelsprodukt der Firma Condea Augusta S.p.A.) im Handel erhältlich ist. Dieses Produkt wird unten näher beschrieben. Der Zeolith kann als sprühgetrocknetes Pulver oder auch als ungetrocknete, von ihrer Herstellung noch feuchte, stabilisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser.

Als weitere besonders geeignete Zeolithe sind Zeolithe vom Faujasit-Typ zu nennen. Zusammen mit den Zeolithen X und Y gehört das Mineral Faujasit zu den Faujasit-Typen innerhalb der Zeolith-Strukturgruppe 4, die durch die Doppelsechsring-Untereinheit D6R gekennzeichnet sind (Vergleiche Donald W. Breck: "Zeolite Molecular Sieves", John Wiley & Sons, New York, London, Sydney, Toronto, 1974, Seite 92). Zur Zeolith-Strukturgruppe 4 zählen neben den genannten Faujasit-Typen noch die Mineralien Chabazit und Gmelinit sowie die synthetischen Zeolithe R (Chabazit-Typ), S (Gmelinit-Typ), L und ZK-5. Die beiden letztgenannten synthetischen Zeolithe haben keine mineralischen Analoga.

Zeolithe vom Faujasit-Typ sind aus β-Käfigen aufgebaut, die tetrahedral über D6R-Untereinheiten verknüpft sind, wobei die β-Käfige ähnlich den Kohlenstoffatomen im Diamanten angeordnet sind. Das dreidimensionale Netzwerk der erfindungsgemäß geeigneten Zeolithe vom Faujasit-Typ weist Poren von 2,2 und 7,4 Å auf, die Elementarzelle enthält darüber hinaus 8 Kavitäten mit ca. 13 Å Durchmesser und läßt sich durch die Formel Na₈₆[(AlO₂)₈₆(SiO₂)₁₀₆] 264 H₂O beschreiben. Das Netzwerk des Zeolith X enthält dabei ein Hohlraumvolumen von ungefähr 50%, bezogen auf den dehydratisierten Kristall, was den größten Leerraum aller bekannten Zeolithe darstellt (Zeolith Y: ca. 48% Hohlraumvolumen, Faujasit: ca. 47% Hohlraumvolumen). (Alle Daten aus: Donald W. Breck: "Zeolite Molecular Sieves", John Wiley & Sons, New York, London, Sydney, Toronto, 1974, Seiten 145, 176, 177.)

Im Rahmen der vorliegenden Erfindung kennzeichnet der Begriff "Zeolith vom Faujasit-Typ" alle drei Zeolithe, die die Faujasit-Untergruppe der Zeolith-Strukturgruppe 4 bilden. Neben dem Zeolith X sind erfindungsgemäß also auch Zeolith Y und Faujasit sowie Mischungen dieser Verbindungen geeignet, wobei der reine Zeolith X bevorzugt ist.

Auch Mischungen oder Cokristallisate von Zeolithen des Faujasit-Typs mit anderen Zeolithen, die nicht zwingend der Zeolith-Strukturgruppe 4 angehören müssen, sind erfindungsgemäß geeignet, wobei vorzugsweise mindestens 50 Gew.-% der Zeolithe Zeolithe vom Faujasit-Typ sind.

Die geeigneten Aluminiumsilikate sind kommerziell erhältlich, und die Methoden zu ihrer Darstellung sind in Standardmonographien beschrieben.

Beispiele für kommerziell erhältliche Zeolithe vom X-Typ können durch die folgenden Formeln beschrieben werden:

Na₈₆[(AlO₂)₈₆(SiO₂)₁₀₆] · x H₂O,

K₈₆[(AlO₂)₈₆(SiO₂)₁₀₆] · x H₂O,

Ca₄₀Na₆[(AlO₂)₈₆(SiO₂)₁₀₆] · x H₂O,

Sr₂₁Ba₂₂[(AlO₂)₈₆(SiO₂)₁₀₆] · x H₂O,

in denen x Werte zwischen 0 und 276 annehmen kann. Diese Zeolithe weisen Porengrößen von 8,0 bis 8,4 Å auf.

Geeignet ist beispielsweise auch der in der europäischen Patentanmeldung EP 816 291 A1 beschriebene Zeolith A-LSX, der einem Co-Kristallisat aus Zeolith X und Zeolith A entspricht und in seiner wasserfreien Form die Formel (M_{2/n}O + M'_{2/n}O)·Al₂O₃·zSiO₂ besitzt, wobei M und M' Alkali- oder Erdalkalimetalle sein können und z eine Zahl zwischen 2,1 und 2,6 ist. Kommerziell erhältlich ist dieses Produkt unter dem Markennamen VEGOBOND AX von der Firma CONDEA Augusta S.p.A.

Auch Zeolithe vom Y-Typ sind kommerziell erhältlich und lassen sich beispielsweise durch die Formeln

Na₅₆[(AlO₂)₅₆(SiO₂)₁₃₆ ] · x H₂O,

K₅₆[(AlO₂)₅₆(SiO₂)₁₃₆] · x H₂O,

in denen x für Zahlen zwischen 0 und 276 steht, beschreiben. Diese Zeolithe weisen Porengrößen von 8,0 Å auf.

Die Teilchengrößen der geeigneten Zeolithe vom Faujasit-Typ liegen dabei im Bereich von 0,1 bis zu 100 um, vorzugsweise zwischen 0,5 und 50 µm und insbesondere zwischen 1 und 30 µm, jeweils mit Standard-Teilchengrößenbestimmungsmethoden gemessen.

Bevorzugt ist jedoch in den Mitteln nicht nur ein anorganischer Builder, sondern ein Buildersystem enthalten, welches einen oder mehrere anorganische und/oder organische Builder und/oder Cobuilder aufweist. Dieses Buildersystem ist vorzugsweise überwiegend wasserlöslicher Natur. Darunter wird im Rahmen der vorliegenden Erfindung verstanden, daß mindestens 50 Gew.-% aller eingesetzten Builder und/oder Cobuilder, vorteilhafterweise aber mindestens 60 Gew.-% und insbesondere mindestens 70 Gew.-% des Buildersystems wasserlöslich sind. Ganz besonders bevorzugt sind dabei direkte Sprühtrocknungsprodukte, welche ein Buildersystem aufweisen, die zu 75 bis 100 Gew.-% wasserlösliche Builder und Cobuilder enthalten.

Vorzugsweise sind sogar alle enthaltenen anorganischen Bestandteile von wasserlöslicher Natur. In diesen Ausführungsformen werden deshalb andere Buildersubstanzen als die bereits genannten Zeolithe eingesetzt. Auch hier sind Buildersysteme aus anorganischen und/oder organischen Buildern und/oder Cobuildern bevorzugt.

Insbesondere ist es bevorzugt, daß die Mittel mindestens einen anorganischen Builder und mindestens einen organischen Builder enthalten. Weiterhin ist es bevorzugt, daß die erfindungsgemäßen Mittel mindestens 2 verschiedene anorganische Builder sowie optional mindestens einen organischen Cobuilder aufweisen.

In Fällen, in denen ein Phosphat-Gehalt toleriert wird, können auch Phosphate mitverwendet werden, insbesondere Pentanatriumtriphosphat, gegebenenfalls auch Pyrophosphate sowie Orthophosphate, die in erster Linie als Fällungsmittel für Kalksalze wirken. Phosphate werden überwiegend in maschinellen Geschirrspülmitteln, teilweise aber auch noch in Waschmitteln eingesetzt.

Alkalimetallphosphate ist dabei die summarische Bezeichnung für die Alkalimetall- (insbesondere Natrium- und Kalium-) -Salze der verschiedenen Phosphorsäuren, bei denen man Metaphosphorsäuren (HPO₃)ₙ und Orthophosphorsäure H₃PO₄ neben höhermolekularen Vertretern unterscheiden kann. Die Phosphate vereinen dabei mehrere Vorteile in sich: Sie wirken als Alkaliträger, verhindern Kalkbeläge auf Maschinenteilen bzw. Kalkinkrustationen in Geweben und tragen überdies zur Reinigungsleistung bei.

Natriumdihydrogenphosphat, NaH₂PO₄, existiert als Dihydrat (Dichte 1,91 gcm⁻³, Schmelzpunkt 60°) und als Monohydrat (Dichte 2,04 gcm⁻³). Beide Salze sind weiße, in Wasser sehr leicht lösliche Pulver, die beim Erhitzen das Kristallwasser verlieren und bei 200°C in das schwach saure Diphosphat (Dinatriumdihydrogendiphosphat, Na₂H₂P₂O₇), bei höherer Temperatur in Natiumtrimetaphosphat (Na₃P₃O₉) und Maddrellsches Salz (siehe unten), übergehen. NaH₂PO₄ reagiert sauer; es entsteht, wenn Phosphorsäure mit Natronlauge auf einen pH-Wert von 4,5 eingestellt und die Maische versprüht wird. Kaliumdihydrogenphosphat (primäres oder einbasiges Kaliumphosphat, Kaliumbiphosphat, KDP), KH₂PO₄, ist ein weißes Salz der Dichte 2,33 gcm⁻³, hat einen Schmelzpunkt 253° [Zersetzung unter Bildung von Kaliumpolyphosphat (KPO₃)ₓ] und ist leicht löslich in Wasser.

Dinatriumhydrogenphosphat (sekundäres Natriumphosphat), Na₂HPO₄, ist ein farbloses, sehr leicht wasserlösliches kristallines Salz. Es existiert wasserfrei und mit 2 Mol. (Dichte 2,066 gcm⁻³, Wasserverlust bei 95°), 7 Mol. (Dichte 1,68 gcm⁻³, Schmelzpunkt 48° unter Verlust von 5 H₂O) und 12 Mol. Wasser (Dichte 1,52 gcm⁻³, Schmelzpunkt 35° unter Verlust von 5 H₂O), wird bei 100° wasserfrei und geht bei stärkerem Erhitzen in das Diphosphat Na₄P₂O₇ über. Dinatriumhydrogenphosphat wird durch Neutralisation von Phosphorsäure mit Sodalösung unter Verwendung von Phenolphthalein als Indikator hergestellt. Dikaliumhydrogenphosphat (sekundäres od. zweibasiges Kaliumphosphat), K₂HPO₄, ist ein amorphes, weißes Salz, das in Wasser leicht löslich ist.

Trinatriumphosphat, tertiäres Natriumphosphat, Na₃PO₄, sind farblose Kristalle, die als Dodecahydrat eine Dichte von 1,62 gcm⁻³ und einen Schmelzpunkt von 73-76°C (Zersetzung), als Decahydrat (entsprechend 19-20% P₂O₅) einen Schmelzpunkt von 100°C und in wasserfreier Form (entsprechend 39-40% P₂O₅) eine Dichte von 2,536 gcm⁻³ aufweisen. Trinatriumphosphat ist in Wasser unter alkalischer Reaktion leicht löslich und wird durch Eindampfen einer Lösung aus genau 1 Mol Dinatriumphosphat und 1 Mol NaOH hergestellt. Trikaliumphosphat (tertiäres oder dreibasiges Kaliumphosphat), K₃PO₄, ist ein weißes, zerfließliches, körniges Pulver der Dichte 2,56 gcm⁻³, hat einen Schmelzpunkt von 1340° und ist in Wasser mit alkalischer Reaktion leicht löslich. Es entsteht z.B. beim Erhitzen von Thomasschlacke mit Kohle und Kaliumsulfat. Trotz des höheren Preises werden in der Reinigungsmittel-Industrie die leichter löslichen, daher hochwirksamen, Kaliumphosphate gegenüber entsprechenden Natrium-Verbindungen vielfach bevorzugt.

Tetranatriumdiphosphat (Natriumpyrophosphat), Na₄P₂O₇, existiert in wasserfreier Form (Dichte 2,534 gcm⁻³, Schmelzpunkt 988°, auch 880° angegeben) und als Decahydrat (Dichte 1,815-1,836 gcm⁻³, Schmelzpunkt 94° unter Wasserverlust). Beide Substanzen sind farblose, in Wasser mit alkalischer Reaktion lösliche Kristalle. Na₄P₂O₇ entsteht beim Erhitzen von Dinatriumphosphat auf >200° oder indem man Phosphorsäure mit Soda im stöchiometrischem Verhältnis umsetzt und die Lösung durch Versprühen entwässert. Das Decahydrat komplexiert Schwermetall-Salze und Härtebildner und verringert daher die Härte des Wassers. Kaliumdiphosphat (Kaliumpyrophosphat), K₄P₂O₇, existiert in Form des Trihydrats und stellt ein farbloses, hygroskopisches Pulver mit der Dichte 2,33 gcm⁻³ dar, das in Wasser löslich ist, wobei der pH-Wert der 1 %igen Lösung bei 25° 10,4 beträgt.

Durch Kondensation des NaH₂PO₄ bzw. des KH₂PO₄ entstehen höhermol. Natrium- und Kaliumphosphate, bei denen man cyclische Vertreter, die Natrium- bzw. Kaliummetaphosphate und kettenförmige Typen, die Natrium- bzw. Kaliumpolyphosphate, unterscheiden kann. Insbesondere für letztere sind eine Vielzahl von Bezeichnungen in Gebrauch: Schmelz- oder Glühphosphate, Grahamsches Salz, Kurrolsches und Maddrellsches Salz. Alle höheren Natrium- und Kaliumphosphate werden gemeinsam als kondensierte Phosphate bezeichnet.

Das technisch wichtige Pentanatriumtriphosphat, Na₅P₃O₁₀ (Natriumtripolyphosphat), ist ein wasserfrei oder mit 6 H₂O kristallisierendes, nicht hygroskopisches, weißes, wasserlösliches Salz der allgemeinen Formel NaO-[P(O)(ONa)-O]ₙ-Na mit n=3. In 100 g Wasser lösen sich bei Zimmertemperatur etwa 17 g, bei 60° ca. 20 g, bei 100° rund 32 g des kristallwasserfreien Salzes; nach zweistündigem Erhitzen der Lösung auf 100° entstehen durch Hydrolyse etwa 8% Orthophosphat und 15% Diphosphat. Bei der Herstellung von Pentanatriumtriphosphat wird Phosphorsäure mit Sodalösung oder Natronlauge im stöchiometrischen Verhältnis zur Reaktion gebracht und die Lösung durch Versprühen entwässert. Ähnlich wie Grahamsches Salz und Natriumdiphosphat löst Pentanatriumtriphosphat viele unlösliche Metall-Verbindungen (auch Kalkseifen usw.). Pentakaliumtriphosphat, K₅P₃O₁₀ (Kaliumtripolyphosphat), kommt beispielsweise in Form einer 50 Gew.-%-igen Lösung (> 23% P₂O₅, 25% K₂O) in den Handel. Die Kaliumpolyphosphate finden in der Wasch- und Reinigungsmittel-Industrie breite Verwendung. Weiter existieren auch Natriumkaliumtripolyphosphate, welche ebenfalls im Rahmen der vorliegenden Erfindung einsetzbar sind. Diese entstehen beispielsweise, wenn man Natriumtrimetaphosphat mit KOH hydrolysiert:

(NaPO₃)₃ + 2 KOH → Na₃K₂P₃O₁₀ + H₂O

Diese sind erfindungsgemäß genau wie Natriumtripolyphosphat, Kaliumtripolyphosphat oder Mischungen aus diesen beiden einsetzbar; auch Mischungen aus Natriumtripolyphosphat und Natriumkaliumtripolyphosphat oder Mischungen aus Kaliumtripolyphosphat und Natriumkaliumtripolyphosphat oder Gemische aus Natriumtripolyphosphat und Kaliumtripolyphosphat und Natriumkaliumtripolyphosphat sind erfindungsgemäß einsetzbar.

In einer bevorzugten Ausführungsform der Erfindung werden jedoch als anorganischen Buildersubstanzen insbesondere Carbonate und Silicate eingesetzt.

Zu nennen sind hier vor allem kristalline, schichtförmige Natriumsilicate der allgemeinen Formel NaMSiₓO₂ₓ₊₁·yH₂O, wobei M Natrium oder Wasserstoff bedeutet, x eine Zahl von 1,6 bis 4, vorzugsweise 1,9 bis 4,0 und y eine Zahl von 0 bis 20 ist und bevorzugte Werte für x 2, 3 oder 4 sind. Da derartige kristalline Silicate aber in einem Sprühtrocknungsverfahren mindestens teilweise ihre kristalline Struktur verlieren, werden kristalline Silicate vorzugsweise nachträglich zu dem direkten oder nachbehandelten Sprühtrocknungsprodukt zugemischt. Derartige kristalline Schichtsilicate werden beispielsweise in der europäischen Patentanmeldung EP-A-0 164 514 beschrieben. Bevorzugte kristalline Schichtsilicate der angegebenen Formel sind solche, in denen M für Natrium steht und x die Werte 2 oder 3 annimmt. Insbesondere sind sowohl β- als auch δ-Natriumdisilicate Na₂Si₂O₅·yH₂O bevorzugt. Im Handel befinden sich derartige Verbindungen beispielsweise unter der Bezeichnung SKS^{®} (Fa. Clariant). So handelt es sich bei SKS-6^{®} vorwiegend um ein δ-Natriumdisilicat mit der Formel Na₂Si₂O₅·yH₂O, bei SKS-7^{®} vorwiegend um das β-Natriumdisilicat. Durch Reaktion mit Säuren (z.B. Citronensäure oder Kohlensäure) entsteht aus dem δ-Natriumdisilicat Kanemit NaHSi₂O₅·yH₂O, im Handel unter den Bezeichnungen SKS-9^{®} bzw. SKS-10^{®} (Fa. Clariant). Von Vorteil kann es auch sein chemische Modifikationen dieser Schichtsilicate einzusetzen. So kann beispielsweise die Alkalität der Schichtsilicate geeignet beeinflußt werden. Mit Phosphat bzw. mit Carbonat dotierte Schichtsilicate weisen im Vergleich zu dem S-Natriumdisilicat veränderte Kristallmorphologien auf, lösen sich schneller und zeigen im Vergleich zu 5-Natriumdisilicat ein erhöhtes Calciumbindevermögen. So sind Schichtsilicate der allgemeinen Summenformel x Na₂O • y SiO₂ • z P₂O₅ in der das Verhältnis x zu y einer Zahl 0,35 bis 0,6, das Verhältnis x zu z einer Zahl von 1,75 bis 1200 und das Verhältnis y zu z einer Zahl von 4 bis 2800 entspricht in der Patentanmeldung DE-A-196 01 063 beschrieben. Die Löslichkeit der Schichtsilicate kann auch erhöht werden, indem besonders feinteilige Schichtsilicate eingesetzt werden. Auch Compounds aus den kristallinen Schichtsilicaten mit anderen Inhaltsstoffen können eingesetzt werden. Dabei sind insbesondere Compounds mit Cellulosederivaten, die Vorteile in der desintegrierenden Wirkung aufweisen, sowie Compounds mit Polycarboxylaten, z.B. Citronensäure, bzw. polymeren Polycarboxylaten, z.B. Copolymeren der Acrylsäure, zu nennen.

Zu den bevorzugten Buildersubstanzen gehören auch amorphe Natriumsilikate mit einem Modul Na₂O : SiO₂ von 1:2 bis 1:3,3, vorzugsweise von 1:2 bis 1:2,8 und insbesondere von 1:2 bis 1:2,6, welche löseverzögert sind und Sekundärwascheigenschaften aufweisen. Die Löseverzögerung gegenüber herkömmlichen amorphen Natriumsilikaten kann dabei auf verschiedene Weise, beispielsweise durch Oberflächenbehandlung, Compoundierung, Kompaktierung/Verdichtung oder durch Übertrocknung hervorgerufen worden sein. Im Rahmen dieser Erfindung wird unter dem Begriff "amorph" auch "röntgenamorph" verstanden. Dies heißt, daß die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharfe Beugungsmaxima liefern. Dies ist so zu interpretieren, daß die Produkte mikrokristalline Bereiche der Größe 10 bis einige Hundert nm aufweisen, wobei Werte bis max. 50 nm und insbesondere bis max. 20 nm bevorzugt sind. Derartige sogenannte röntgenamorphe Silikate, welche ebenfalls eine Löseverzögerung gegenüber den herkömmlichen Wassergläsern aufweisen, werden beispielsweise in der deutschen Patentanmeldung DE-A- 44 00 024 beschrieben. Insbesondere bevorzugt sind verdichtete/kompaktierte amorphe Silikate, compoundierte amorphe Silikate und übertrocknete röntgenamorphe Silikate. Der Gehalt der (röntgen-)amorphen Silicate in den zeolithfreien direkten Sprühtrocknungsprodukten beträgt vorzugsweise 1 bis 10 Gew.-%.

Besonders bevorzugte anorganische wasserlösliche Builder sind jedoch Alkalimetallcarbonate und Alkalimetallbicarbonate, gegebenenfalls in Kombination mit Sesquicarbonaten, wobei Natrium- und Kaliumcarbonat und insbesondere Natriumcarbonat zu den bevorzugten Ausführungsformen zählen. Von besonderem Vorteil sind Mittel, welche Natriumcarbonat und Natriumbicarbonat enthalten. Der Gehalt der Alkalimetallcarbonate und/oder der Alkalimetallbicarbonate in den insbesondere zeolithfreien direkten Sprühtrocknungsprodukten kann in einem sehr breiten Rahmen variieren und beträgt vorzugsweise 5 bis 40 Gew.-%, insbesondere 8 bis 30 Gew.-%, wobei üblicherweise der Gehalt an Alkalimetallcarbonaten und/oder der Alkalimetallbicarbonate höher ist als an amorphen Silikaten.

Brauchbare organische Gerüstsubstanzen sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Methylglycindiessigsäure, Zuckersäuren und Mischungen aus diesen.

Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von Wasch- oder Reinigungsmitteln. Insbesondere sind hierbei Citronensäure, Bernsteinsäure, Glutarsäure, Adipinsäure, Gluconsäure und beliebige Mischungen aus diesen zu nennen.

Als organische Cobuilder sind weiter polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70000 g/mol.

Bei den für polymere Polycarboxylate angegebenen Molmassen handelt es sich im Sinne dieser Schrift um gewichtsmittlere Molmassen M_{w} der jeweiligen Säureform, die grundsätzlich mittels Gelpermeationschromatographie (GPC) bestimmt wurden, wobei ein UV-Detektor eingesetzt wurde. Die Messung erfolgte dabei gegen einen externen Polyacrylsäure-Standard, der aufgrund seiner strukturellen Verwandtschaft mit den untersuchten Polymeren realistische Molgewichtswerte liefert. Diese Angaben weichen deutlich von den Molgewichtsangaben ab, bei denen Polystyrolsulfonsäuren als Standard eingesetzt werden. Die gegen Polystyrolsulfonsäuren gemessenen Molmassen sind in der Regel deutlich höher als die in dieser Schrift angegebenen Molmassen.

Geeignete Polymere sind insbesondere Polyacrylate, die bevorzugt eine Molekülmasse von 1000 bis 20000 g/mol aufweisen. Aufgrund ihrer überlegenen Löslichkeit können aus dieser Gruppe wiederum die kurzkettigen Polyacrylate, die Molmassen von 1000 bis 10000 g/mol, und besonders bevorzugt von 1200 bis 8000 g/mol, beispielsweise 2000 oder 8000 g/mol, und insbesondere von 3000 bis 5000 g/mol aufweisen, bevorzugt sein.

Besonders bevorzugt werden in den erfindungsgemäßen Mitteln sowohl Polyacrylate als auch Copolymere aus ungesättigten Carbonsäuren, Sulfonsäuregruppen-haltigen Monomeren sowie gegebenenfalls weiteren ionischen oder nichtionogenen Monomeren eingesetzt. Die Sulfonsäuregruppen-haltigen Copolymere werden in der Folge ausführlich beschrieben.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2000 bis 100000 g/mol, vorzugsweise 20000 bis 90000 g/mol und insbesondere mindestens 30000 bis 80000 g/mol, wobei auch Polymere dieser Art mit relativen Molekülmassen bis 70000 g/mol, bis 50000 g/mol oder von 30000 bis 40000 g/mol geeignet sind.

Der Gehalt der direkten Sprühtrocknungsprodukte an organischen Buildersubstanzen kann ebenfalls in einem breiten Rahmen variieren. Bevorzugt sind Gehalte von 2 bis 20 Gew.-%, wobei insbesondere aus Kostengründen Gehalte von maximal 10 Gew.-% insbesondere Anklang finden.

Aus den restlichen Gruppen üblicher Waschmittelbestandteile kommen zur Mitverwendung bei der erfindungsgemäßen Sprühtrocknung insbesondere Komponenten aus den Klassen der Vergrauungsinhibitoren (Schmutzträger), der Neutralsalze und der textilweichmachenden Hilfsmittel in Betracht.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z.B. abgebaute Stärke, Aldehydstärken usw.. Auch Polyvinylpyrrolidon ist brauchbar. Bevorzugt werden jedoch Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, sowie Polyvinylpyrrolidon beispielsweise in Mengen von 0,1 bis 5 Gew.-%, bezogen auf die Mittel, eingesetzt.

Als typisches Beispiel für einen geeigneten Vertreter der Neutralsalze ist das bereits erwähnte Natriumsulfat zu nennen. Es kann in Mengen von beispielsweise 2 bis 45 Gew.-% eingesetzt werden.

Geeignete Weichmacher sind beispielsweise quellfähige Schichtsilikate von der Art entsprechender Montmorillonite, beispielsweise Bentonit.

Der Gehalt an Wasser im direkten Sprühtrocknungsprodukt beträgt vorzugsweise 0 bis weniger als 10 Gew.-% und insbesondere 0,5 bis 8 Gew.-%, wobei Werte von maximal 5 Gew.-% besondere Bevorzugung finden. Nicht miteingerechnet wurde hierbei das an gegebenenfalls vorhandene Aluminosilikate wie Zeolith anhaftende Wasser.

Die direkten Sprühtrocknungsprodukte weisen nicht nur ein hervorragendes Rieselverhalten auf, auch der Klumptest wird regelmäßig mit sehr guten Noten bestanden (Beschreibung der Tests siehe unten).

So ergab ein direktes Sprühtrocknungsprodukt mit einem Schüttgewicht von 420 g/l, einem Wassergehalt von 2,2 Gew.-%, einer Teilchengrößenverteilung, welche wie folgt aussah (Siebanalyse): > 1,6 mm 0 Gew.-%, auf 0,8 mm 1 Gew.-%, auf 0,4 mm 24 Gew.-%, auf 0,2 mm 47 Gew.-%, auf 0,1 mm 25 Gew.-% und darunter 3 Gew.-%, und einem Weissgrad Y von 97,6 % nicht nur direkt nach der Herstellung, sondern auch nach der Lagerung (8 Wochen Lagerung bei 23 °C und 50% Feuchte) im Klumptest eine "0".

Die Mittel zeichnen sich außerdem dadurch aus, daß sie einen relativ hohen Trockenrückstand aufweisen. So beträgt der Trockenrückstand vorzugsweise 94,5 bis 99,8 % und insbesondere 95,2 bis 99,2 %, wobei Mittel mit Trockenrückständen von 96,0 bis 98,5 % als besonders vorteilhaft angesehen werden. (Beschreibung der Bestimmung des Trockenrückstands siehe unten)

In dem erfindungsgemäßen Verfahren wird eine flüssige oder pastöse lösungsmittelhaltige, insbesondere wasserhaltige-Zusammensetzung auf eine Temperatur erhitzt, die über dem Siedepunkt des Lösungsmittels, insbesondere Wasser, liegt, die erhitzte flüssige oder pastöse lösungsmittelhaltige, insbesondere wasserhaltige Zusammensetzung unter Überdruck und bei einer Temperatur, die über dem Siedepunkt des Lösungsmittels, insbesondere Wasser, liegt, einer Zerstäubungsvorrichtung zugeführt und die erhitzte flüssige oder pastöse lösungsmittelhaltige, insbesondere wasserhaltige, Zusammensetzung unter Überdruck und bei einer Temperatur, die über dem Siedepunkt des Lösungsmittels, insbesondere Wasser, liegt, mittels der Zerstäubungsvorrichtung in einen nicht unter Überdruck befindlichen Relaxationsraum zerstäubt. Das Erhitzen der flüssigen bis pastösen lösungsmittelhaltigen und insbesondere wasserhaltigen Zusammensetzung erfolgt durch direkten Wärmeeintrag oder durch eine Kombination aus direktem und indirektem Wärmeeintrag. Vorzugsweise wird die Zusammensetzung im Gegensatz zu herkömmlichen Sprühtrocknungsverfahren, bei denen Slurry-Temperaturen üblicherweise auf maximal etwa 80 °C eingestellt wurden, im erfindungsgemäßen Verfahren auf über 100 °C, insbesondere auf mindestens 130 °C und besonders bevorzugt auf mindestens 160 °C erhitzt.

Ein derartiges Verfahren wird in der nicht vorveröffentlichten deutschen Patentanmeldung und in dem mittlerweile erteilten deutschen Patent DE 100 21 539 C1 bzw der internationalen Patentanmeldung WO 01/83071 A1 beschrieben, auf deren Inhalt an dieser Stelle ausdrücklich verwiesen wird. Erfindungsgemäß ist es besonders bevorzugt, das Verfahren unter Verwendung einer Vorrichtung zur Sprühtrocknung durchzuführen, welche
a) eine Zuführung für eine flüssige oder pastöse lösungsmittelhaltige, insbesondere wasserhaltige, Zusammensetzung,
b) Mittel zum Erhitzen der flüssigen oder pastösen lösungsmittelhaltigen, insbesondere wasserhaltigen, Zusammensetzung auf eine Temperatur, die über dem Siedepunkt des Lösungsmittels liegt, wobei der Wärmeeintrag direkt oder durch Kombination von direkt oder indirekt wirkenden Mitteln erfolgt,
c) Mittel zum Transport der in b) erhitzten flüssigen oder pastösen lösungsmittelhaltigen, insbesondere wasserhaltigen, Zusammensetzung unter Überdruck und bei einer Temperatur, die über dem Siedepunkt des Lösungsmittels liegt,
d) Mittel zur Zerstäubung der in b) erhitzten und in c) unter Überdruck transportierten flüssigen oder pastösen lösungsmittelhaltigen, insbesondere wasserhaltigen, Zusammensetzung bei einer Temperatur, die über dem Siedepunkt des Lösungsmittels, insbesondere Wasser, liegt sowie
e) einen nicht unter Überdruck befindlichen Relaxationsraum, der die mittels d) zerstäubte Zusammensetzung aufnimmt,
aufweist.

Vorteilhafterweise ist der Energiebedarf dieser Vorrichtung bei gleicher Trocknungsleistung geringer als der herkömmlicher Sprühtrockner. Die Energieersparnis liegt in der Regel bei etwa 10 % bis etwa 35 %. Zudem erfolgt durch den Transport und die Zerstäubung unter Überdruck eine weitgehende Drucksterilisation der zu trocknenden Zusammensetzung, insbesondere wenn die Suspension über 150 °C erhitzt wird. Bei der unter Überdruck erfolgenden Zerstäubung in den nicht unter Überdruck befindlichen Relaxationsraum kommt es zu einer Entspannungsverdampfung des Lösungsmittels oder zumindest von Teilen des Lösungsmittels. Bei der Entspannungsverdampfung (Flash-Verdampfung) wird ein flüssiger Stoffstrom auf einen niedrigeren Druck gebracht. Dabei verdampft ein Teil der Flüssigkeit, die sich dabei abkühlt, d.h. die für den Verdampfungsvorgang erforderliche Verdampfungsenthalpie wird hierbei der verbleibenden Restflüssigkeit entnommen und nicht von außen zugeführt. Im Detail kann man sich den Entspannungsverdampfungsvorgang so vorstellen, daß sich nach der Druckabsenkung in der Flüssigkeit zunächst eine große Anzahl kleinster Dampfblasen bildet. Die Dampfmenge wächst dann soweit an, bis bei ausreichender Verweilzeit im Entspannungsbehälter das thermodynamische Gleichgewicht erreicht wird, d.h. sich bei Normaldruck eine Temperatur des Dampfes und der Tropfen von 100 °C einstellt.

Als Trocknungsgase können eine Vielzahl von Gasen eingesetzt werden. Bevorzugt sind im Rahmen der vorliegenden Erfindung jedoch Luft und Luft/Rauchgas-Gemische, Stickstoff und/oder überhitzter Wasserdampf. Dabei wird in der Trocknungsstufe vorzugsweise ein Trockenrückstand von 94,5 bis 99,8 % und insbesondere von 95,2 bis 99,2 % erreicht. Besonders bevorzugt wird ein Trockenrückstand von 96,0 bis 98,5 % eingestellt.

Der rapide Druckabfall hat eine zusätzliche sterilisierende Wirkung, da er die Zellmembranen und/oder Zellwände noch intakter Mikroorganismen zerreißt und diese dadurch abtötet.

Ein weiterer, überraschender positiver Effekt, der bei der Anwendung des erfindungsgemäßen Verfahrens zu beobachten ist, besteht in der Erhöhung des sogenannten Berger Weissgrades bei der Trocknung von Wasch-, Netz- oder Reinigungsmitteln um etwa 20 % bis etwa 70 %, meistens um etwa 50%, verglichen mit konventionell sprühgetrockneten Produkten.

Eine flüssige oder pastöse lösungsmittelhaltige Zusammensetzung im Sinne der vorliegenden Erfindung kann jede zweckmäßige Lösung, Dispersion oder Kombination von Lösung und Dispersion eines Feststoffs in dem Lösungsmittel sein. Insbesondere finden im erfindungsgemäßen Verfahren flüssige oder pastöse wasserhaltige Zusammensetzungen Anwendung, die einer Entspannungsverdampfung im Sprühtrockner unterworfen werden.

Als Mittel b) der Vorrichtung kann im erfindungsgemäßen Verfahren grundsätzlich jede Wärmequelle eingesetzt werden, die geeignet ist, die flüssige oder pastöse lösungsmittelhaltige, insbesondere wasserhaltige, Zusammensetzung auf eine Temperatur zu erhitzen, die über dem Siedepunkt des Lösungsmittels, insbesondere Wasser, liegt. Die Wärmeeinleitung kann direkt oder durch eine Kombination aus direktem und indirektem Wärmeeintrag erfolgen. Geeignete indirekt wirkende Wärmequellen sind - wie im deutschen Patent DE 100 21 539 C1 offenbart - beispielsweise Gasbrenner, Heizstrahler oder insbesondere Wärmetauscher.

Bei der direkten Wärmeeinleitung wird zum Erhitzen b) Wasserdampf eingesetzt, der unter Druck steht, wobei die erfindungsgemäß eingesetzte Vorrichtung ein Mittel zur Direkteinleitung des unter Druck stehenden Wasserdampfs vorsieht. Als Mittel zur Direkteinleitung des unter Druck stehenden Dampfes ist insbesondere ein Mittel bevorzugt, das nach dem Venturi-Prinzip wie Venturi-Rohr oder Venturi-Düse arbeitet. In einer bevorzugten Ausführungsform der Erfindung erfolgt die Direkteinleitung des Wasserdampfs mit einem Druck des Dampfs von 20 bis 75 bar.

Sowohl Wärmetauscher als auch die direkte Einleitung von unter Druck stehendem Wasserdampf stellen als Alternativen für die Wärmequelle b) besonders bevorzugte Ausführungsformen dar. In einigen Ausführungsformen der Erfindung hat es sich allerdings als besonders vorteilhaft erwiesen, wenn anstatt des Wärmetauschers unter Druck stehender Wasserdampf eingesetzt wird. Dies ist insbesondere dann der Fall, wenn die sprühzutrocknende Zusammensetzung relativ hohe Mengen von Inhaltsstoffen, insbesondere von anorganischen Salzen wie Carbonaten und Sulfaten, enthält, die oberhalb einer bestimmten Temperatur verringerte Löslichkeiten in dem Lösungsmittel, insbesondere Wasser aufweisen und dementsprechend bei den Verfahrenstemperaturen zum Auskristallisieren und zur Ablagerung auf dem Wärmetauscher tendieren. Deshalb wird in einer bevorzugten Ausführungsform der Erfindung ein Wärmetauscher mit Wandbelag-Abreinigungseinrichtungen eingesetzt. Durch die Direkteinleitung von unter Druck stehendem Wasserdampf als Wärmequelle b) werden derartige Ablagerungen aber von vornherein vermieden.

Möglich ist auch eine Kombination von direkter und indirekter Wärmeeinleitung. Beispielhaft sei hier die Anwendung eines dreistufigen Supratrons genannt, mit dessen Hilfe Dampf eingespeist und zusätzlich Wärme über den elektrischen Antrieb generiert werden kann. Der Supratron weist den Vorteil auf, daß im Falle des Vorhandenseins ungelöster Teilchen eine sehr feine Aufmahlung dieser Teilchen erfolgt. Hierdurch wird noch einmal zusätzlich die Feinteiligkeit des Endprodukts positiv, da noch feiner, beeinflußt. Gegebenenfalls im Rahmen der Erfindung als Überkorn angesehene Partikel werden zerkleinert. Außerdem wird durch die feinere Partikelgröße die Gefahr einer Verstopfung der Sprühtrocknungsdüsen verringert.

Die Mittel b) und/oder c) sind vorzugsweise mit einer Mischvorrichtung, insbesondere mit einem üblichen dynamischen oder statischen Mischer, besonders bevorzugt mit einem statischen Mischer, ganz besonders bevorzugt mit einem Doppelmantel-Statikmischer, versehen.

Als Mittel d) der Vorrichtung im erfindungsgemäßen Verfahren eignen sich insbesondere Zerstäuberdüsen, beispielsweise Pneumatik-Zerstäuberdüsen, Hohlkegeldüsen, Vollkegeldüsen, Flachstrahldüsen, Vollstrahldüsen oder Ultraschallzerstäuber.

Die in den Mitteln b) bis d) herrschende Temperatur hängt von der Beschaffenheit des Lösungsmittels und der lösungsmittelhaltigen Zusammensetzung ab. Da das Lösungsmittel insbesondere Wasser ist, liegt in diesem Fall die Temperatur in den Mitteln b) bis d) über 100 °C, insbesondere im Bereich von 100 °C bis 240 °C, besonders bevorzugt im Bereich von 140°C bis 160 °C, ganz besonders bevorzugt bei etwa 150 °C.

Der Überdruck in den Mitteln c) und d) ist ebenfalls von der Beschaffenheit des Lösungsmittels und der lösungsmittelhaltigen Zusammensetzung abhängig. Wird Wasser als Lösungsmittel verwendet, liegt der Überdruck vorzugsweise im Bereich von etwa 5 bar bis etwa 60 bar, insbesondere etwa 20 bar bis etwa 50 bar, besonders bevorzugt etwa 30 bar bis etwa 40 bar.

Im Relaxationsraum e) herrscht Normal- oder Unterdruck, vorzugsweise Normaldruck.

In einer bevorzugten Ausführungsform der vorliegenden Erfindung sind die Merkmale a) bis e) in einen Sprühturm integriert. In dieser Ausführungsform der vorliegenden Erfindung wird die zerstäubte Zusammensetzung in einem Strom aus Heißgas, insbesondere in einem Strom aus überhitztem Wasserdampf als Heißgas, geführt, wie in der WO 92/05849 A1 beschrieben, auf die hiermit in vollem Umfang Bezug genommen wird.

Im Vergleich zu herkömmlichen Sprühtrocknungsverfahren verschiebt sich bei Produkten, die nach dem erfindungsgemäßen Entspannungsverdampfungsverfahren im Sprühtrockner hergestellt wurden, das Maximum der Teilchengrößenverteilung zu signifikant niedrigeren Werten. Zusätzlich erhält man eine schmalere Verteilungskurve der direkten Sprühtrocknungsprodukte als in herkömmlichen Sprühtrocknungsverfahren. Ohne sich auf diese Theorie festlegen zu wollen, geht die Anmelderin davon aus, daß es in herkömmlichen Sprühtrocknungsverfahren wie im Gegenstromverfahren, bei denen die zerstäubten und zu trocknenden Tropfen eine relativ hohe Verweilzeit aufwiesen, zum Teil durch Tropfen-Tropfen-Agglomeration zur Agglomeratbildung kommt, wodurch eine breitere Korngrößenverteilung hervorgerufen wird. Üblicherweise weisen die Tropfen eine Düsenaustrittsgeschwindigkeit von mindestens 50 m/s, vorzugsweise oberhalb von 50 m/s auf. Das Lösungsmittel und insbesondere das Wasser verdunstet durch die entgegenströmende Luft. Hierdurch wird deutlich, daß ein zerstäubter und zu trocknender Tropfen eine gewisse Strecke, lediglich beispielsweise seien hier 0,5 m bis 1 m genannt, zurücklegt, bevor sich der Tropfen in ein festes Partikel umwandelt. Durch die Entspannungsverdampfungsmethode werden zwei entscheidende Parameter verändert: zunächst findet eine Beschleunigung der Tropfen und außerdem entsprechend der Temperaturdifferenz (der Dampfdruck ist signifikant größer als der Umgebungsdruck) eine wesentlich schnellere, idealerweise eine sofortige Verdampfung des Lösungsmittels, insbesondere des Wassers, statt. Dadurch, daß die Partikelbildung nahezu direkt nach dem Austritt aus der Düse stattfindet, wird eine Agglomeratbildung so wird vermutet - verhindert oder zumindest weitgehend zurückgedrängt. Für diese Theorie spricht nicht nur das relativ einheitliche Kornspektrum der erfindungsgemäßen und erfindungsgemäß hergestellten Produkte, sondern auch die Tatsache, daß die Teilchengröße des direkten Sprühtrocknungsprodukts im Rahmen der üblichen produktionstechnischen Genauigkeit mit der Tropfengröße des Sprühstrahls übereinstimmt. Somit wird in einer bevorzugten Ausführungsform der Erfindung die Teilchengröße des direkten Sprühtrocknungsprodukts im Rahmen der üblichen produktionstechnischen Genauigkeit durch die Tropfengröße des Sprühstrahls eingestellt.

Das direkte Sprühtrocknungsprodukt kann entweder als Endprodukt eingesetzt oder nachbehandelt und/oder weiter aufbereitet sein.

In einer bevorzugten Ausführungsform der Erfindung wird das direkte Sprühtrocknungsprodukt verrundet. Dies kann in einem üblichen Verrunder erfolgen. Vorzugsweise beträgt die Verrundungszeit dabei nicht länger als 4 Minuten, insbesondere nicht länger als 3,5 Minuten. Verrundungszeiten von maximal 1,5 Minute oder darunter sind insbesondere bevorzugt. Durch die Verrundung wird eine weitere Vereinheitlichung des Kornspektrums erreicht, da gegebenenfalls entstandene Agglomerate zerkleinert werden. Direkte Sprühtrocknungsprodukte, die nur verrundet, aber nicht zusätzlich auf andere Weise nachbehandelt wurden, weisen vorzugsweise ein Schüttgewicht von maximal 500 g/l auf. Überraschenderweise hat es sich in Abhängigkeit der Rezeptur des direkten Sprühtrocknungsprodukts gezeigt, daß sich durch die Maßnahme des Verrundens die Rieselfähigkeit des Produkts signifikant verschlechtern kann. So ist es möglich, daß durch eine einminütige Verrundung sich die Rieselfähigkeit derart verschlechtert, daß sich im bekannten und unten beschriebenen Rieseltest/Trichtertest die Zeit zum Durchlaufen der Probe signifikant, beispielsweise von 16 Sekunden auf 39 Sekunden erhöhen kann.

Das direkte Sprühtrocknungsprodukt kann wie übliche Sprühtrocknungsprodukte auch mit weiteren Inhaltsstoffen, welche fester, flüssiger und/oder pastöser Natur sein können, aufbereitet werden.

In einem Nachbehandlungsschritt ist es daher möglich, das direkte Sprühtrocknungsprodukt mit einem Feststoff, beispielsweise Kieselsäuren, Zeolithe, Carbonate, Bicarbonate und/oder Sulfate, Citrate, Harnstoff oder Mischungen aus 2 oder mehreren der genannten Bestandteile abzupudern, wie es aus dem Stand der Technik hinreichend bekannt ist. Dies kann entweder direkt nach dem Verlassen des direkten Sprühtrocknungsprodukts aus dem Turm in einem Mischer oder aber vorteilhafterweise im Verrunder erfolgen. Dabei ist es bevorzugt, Feststoffe, insbesondere Bicarbonat und Soda in Mengen von bis zu 15 Gew.-% und insbesondere in Mengen von 2 bis 15 Gew.-%, jeweils bezogen auf das nachbehandelte Produkt, einzusetzen. Überraschenderweise wurde festgestellt, daß die Zugabe von Feststoffen und insbesondere von Bicarbonat, im Verrunder zu einer deutlichen Erhöhung der Rieselfähigkeit führen kann. So zeigte das obengenannte Produkt, welches nach einer einminütigen Verrundung eine Rieselzeit von 39 Sekunden aufwies, nach einer weiteren Verrundungszeit von 10 Sekunden mit 5 Gew.-% Bicarbonat, bezogen auf das nachbehandelte Produkt, eine Rieselzeit von 17 Sekunden, die im Rahmen der Meßgenauigkeit mit dem Ausgangswert von 16 Sekunden des direkten und nicht nachbehandelten Sprühtrocknungsprodukts gleichgesetzt werden kann. Das Schüttgewicht dieses nachbehandelten Produkts lag unterhalb 400 g/l.

In einer weiteren bevorzugten Ausführungsform der Erfindung wird das direkte Sprühtrocknungsprodukt insbesondere vor dem Verrunden mit nichtionischen Tensiden, die beispielsweise optische Aufheller und/oder Hydrotrope enthalten können, Parfüm, eine Lösung von optischem Aufheller und/oder Schauminhibitoren bzw. Zubereitungsformen, welche diese Inhaltsstoffe enthalten können, nachbehandelt. Vorzugsweise werden diese Inhaltsstoffe oder Zubereitungsformen, welche diese Inhaltsstoffe enthalten, in flüssiger, geschmolzener oder pastöser Form auf das direkte Sprühtrocknungsprodukt aufgebracht. Vorteilhafterweise werden die direkten Sprühtrocknungsprodukte mit bis zu 20 Gew.-%, vorteilhafterweise mit 2 bis 18 Gew.-% und insbesondere mit 5 bis 15 Gew.-% Aktivsubstanz der genannten Inhaltsstoffe nachbehandelt. Die Mengenangaben sind jeweils bezogen auf das nachbehandelte Produkt. Dabei ist es bevorzugt, daß die Nachbehandlung mit den hier genannten Substanzen in einem üblicher Mischer, lediglich beispielsweise in einem 2-Wellen-Mischer innerhalb von maximal 1 Minute, vorzugsweise innerhalb von 30 Sekunden und beispielsweise innerhalb von 20 Sekunden, wobei die Zeitangaben gleichzeitig für Zugabe- und Mischzeit steht, erfolgen. Derart nachbehandelte Produkte können ein Schüttgewicht von oberhalb 500 g/l, beispielsweise von 550 bis 700 g/l aufweisen.

Es überrascht den Fachmann nicht, daß durch die Nachbehandlung mit flüssigen nichtionischen Tensiden die Rieselfähigkeit des Produkts beeinträchtigt werden kann. Ausgehend von dem oben genannten direkten Sprühtrocknungsprodukt mit einer Rieselzeit von 16 Sekunden wurde durch Nachbehandlung dieses Produkts mit 15 Gew.-%, bezogen auf das nachbehandelte Produkt, C₁₂-C₁₈-Fettalkohol mit 7 EO eine Rieselzeit von 63 Sekunden erhalten. Bei einer dreiminütigen Verrundung stieg das Schüttgewicht auf 580 g/l und die Rieselzeit auf über 100 Sekunden an.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Palmkern-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO oder 4 EO, C₉-C₁₁-Alkohole mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind (Talg-) Fettalkohole mit 14 EO, 16 EO, 20 EO, 25 EO, 30 EO oder 40 EO.

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist; das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,1 bis 1,4.

Eine weitere Klasse bevorzugt eingesetzter nichtionischer Tenside, die entweder als alleiniges nichtionisches Tensid oder in Kombination mit anderen nichtionischen Tensiden, insbesondere zusammen mit alkoxylierten Fettalkoholen und/oder Alkylglykosiden, eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 A beschrieben sind oder die vorzugsweise nach dem in der internationalen Patentanmeldung WO 90/13533 A1 beschriebenen Verfahren hergestellt werden. Besonders bevorzugt sind C₁₂-C₁₈Fettsäuremethylester mit durchschnittlich 3 bis 15 EO, insbesondere mit durchschnittlich 5 bis 12 EO.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Für das maschinelle Geschirrspülen kommen als Tenside prinzipiell alle Tenside in Frage. Bevorzugt sind für diesen Anwendungszweck aber die vorstehend beschriebenen nichtionischen Tenside und hier vor allem die schwachschäumenden nichtionischen Tenside. Besonders bevorzugt sind die alkoxylierten Alkohole, besonders die ethoxylierten und/oder propoxylierten Alkohole. Dabei versteht der Fachmann allgemein unter alkoxylierten Alkoholen die Reaktionsprodukte von Alkylenoxid, bevorzugt Ethylenoxid, mit Alkoholen, bevorzugt im Sinne der vorliegenden Erfindung die längerkettigen Alkohole (C₁₀ bis C₁₈, bevorzugt zwischen C₁₂ und C₁₆, wie z. B. C₁₁-, C₁₂-, C₁₃-, C₁₄-, C₁₅-, C₁₆-, C₁₇- und C₁₈-Alkohole). In der Regel entstehen aus n Molen Ethylenoxid und einem Mol Alkohol, abhängig von den Reäktionsbedingungen ein komplexes Gemisch von Additionsprodukten unterschiedlichen Ethoxylierungsgrades. Eine weitere Ausführungsform besteht im Einsatz von Gemischen der Alkylenoxide bevorzugt des Gemisches von Ethylenoxid und Propylenoxid. Auch kann man gewünschtenfalls durch eine abschließende Veretherung mit kurzkettigen Alkylgruppen, wie bevorzugt der Butylgruppe, zur Substanzklasse der "verschlossenen" Alkoholethoxylaten gelangen, die ebenfalls eingesetzt werden kann. Ganz besonders bevorzugt sind dabei hochethoxylierte Fettalkohole oder deren Gemische mit endgruppenverschlossenen Fettalkoholethoxylaten.

Als Parfümöle bzw. Duftstoffe können einzelne Riechstoffverbindungen, z.B. die synthetischen Produkte vom Typ der Ester, Ether, Aldehyde, Ketone, Alkohole und Kohlenwasserstoffe verwendet werden. Riechstoffverbindungen vom Typ der Ester sind z.B. Benzylacetat, Phenoxyethylisobutyrat, p-tert.-Butylcyclohexylacetat, Linalylacetat, Dimethylbenzyl-carbinylacetat, Phenylethylacetat, Linalylbenzoat, Benzylformiat, Ethylmethylphenyl-glycinat, Allylcyclohexylpropionat, Styrallylpropionat und Benzylsalicylat. Zu den Ethern zählen beispielsweise Benzylethylether, zu den Aldehyden z.B. die linearen Alkanale mit 8-18 C-Atomen, Citral, Citronellal, Citronellyloxyacetaldehyd, Cyclamenaldehyd, Hydroxycitronellal, Lilial und Bourgeonal, zu den Ketonen z.B. die Jonone, ∝-Isomethylionon und Methyl-cedrylketon, zu den Alkoholen Anethol, Citronellol, Eugenol, Geraniol, Linalool, Phenylethylalkohol und Terpineol, zu den Kohlenwasserstoffen gehören hauptsächlich die Terpene wie Limonen und Pinen. Bevorzugt werden jedoch Mischungen verschiedener Riechstoffe verwendet, die gemeinsam eine ansprechende Duftnote erzeugen. Solche Parfümöle können auch natürliche Riechstoffgemische enthalten, wie sie aus pflanzlichen Quellen zugänglich sind, z.B. Pine-, Citrus-, Jasmin-, Patchouly-, Rosen- oder Ylang-Ylang-Öl. Ebenfalls geeignet sind Muskateller, Salbeiöl, Kamillenöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl.

Weitere denkbare Zusätze sind Schauminhibitoren wie zum Beispiel schauminhibierendes Paraffinöl oder schauminhibierendes Silikonöl, beispielsweise Dimethylpolysiloxan. Auch der Einsatz von Mischungen dieser Wirkstoffe ist möglich. Als bei Raumtemperatur feste Zusatzstoffe kommen, insbesondere bei den genannten schauminhibierenden Wirkstoffen, Paraffinwachse, Kieselsäuren, die auch in bekannter Weise hydrophobiert sein können, und von C₂₋₇-Diaminen und C₁₂₋₂₂-Carbonsäuren abgeleitete Bisamide in Frage.

Für den Einsatz in Frage kommende schauminhibierende Paraffinöle, die in Abmischung mit Paraffinwachsen vorliegen können, stellen im allgemeinen komplexe Stoffgemische ohne scharfen Schmelzpunkt dar. Zur Charakterisierung bestimmt man üblicherweise den Schmelzbereich durch Differential-Thermo-Analyse (DTA), wie in "The Analyst" 87 (1962), 420, beschrieben, und/oder den Erstarrungspunkt. Darunter versteht man die Temperatur, bei der das Paraffin durch langsames Abkühlen aus dem flüssigen in den festen Zustand übergeht. Paraffine mit weniger als 17 C-Atomen sind erfindungsgemäß nicht brauchbar, ihr Anteil im Paraffinölgemisch sollte daher so gering wie möglich sein und liegt vorzugsweise unterhalb der mit üblichen analytischen Methoden, zum Beispiel Gaschromatographie, signifikant meßbaren Grenze. Vorzugsweise werden Paraffine verwendet, die im Bereich von 20°C bis 70°C erstarren. Dabei ist zu beachten, daß auch bei Raumtemperatur fest erscheinende Paraffinwachsgemische unterschiedliche Anteile an flüssigen Paraffinölen enthalten können. Bei den erfindungsgemäß brauchbaren Paraffinwachsen liegt der Flüssiganteil bei 40°C möglichst hoch, ohne bei dieser Temperatur schon 100 % zu betragen. Bevorzugte Paraffinwachsgemische weisen bei 40°C einen Flüssiganteil von mindestens 50 Gew.-%, insbesondere von 55 Gew.-% bis 80 Gew.-%, und bei 60°C einen Flüssiganteil von mindestens 90 Gew.-% auf. Dies hat zur Folge, daß die Paraffine bei Temperaturen bis hinunter zu mindestens 70°C, vorzugsweise bis hinunter zu mindestens 60°C fließfähig und pumpbar sind. Außerdem ist darauf zu achten, daß die Paraffine möglichst keine flüchtigen Anteile enthalten. Bevorzugte Paraffinwachse enthalten weniger als 1 Gew.-%, insbesondere weniger als 0,5 Gew.-% bei 110°C und Normaldruck verdampfbare Anteile. Erfindungsgemäß brauchbare Paraffine können beispielsweise unter den Handelsbezeichnungen Lunaflex® der Firma Fuller sowie Deawax® der DEA Mineralöl AG bezogen werden.

Die Paraffinöle können bei Raumtemperatur feste Bisamide, die sich von gesättigten Fettsäuren mit 12 bis 22, vorzugsweise 14 bis 18 C-Atomen sowie von Alkylendiaminen mit 2 bis 7 C-Atomen ableiten, enthalten. Geeignete Fettsäuren sind Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Geeignete Diamine sind beispielsweise Ethylendiamin 1,3-Pröpylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bis-myristoyl-ethylendiamin, Bispalmitoyl-ethylendiamin, Bis-stearoyl-ethylendiamin und deren Gemische sowie die entsprechenden Derivate des Hexamethylendiamins.

In einigen Ausführungsformen können die genannten Schauminhibitoren auch in dem direkten Sprühtrocknungsprodukt enthalten sein.

In einer weiteren Ausführungsform wird das mit den genannten Inhaltsstoffen nachbehandelte und gegebenenfalls verrundete Produkt mit Feststoffen, vorzugsweise Bicarbonat und/oder Soda, insbesondere in Mengen von 2 bis 15 Gew.-%, bezogen auf das nachbehandelte Produkt, nachbehandelt. Auch hier findet die Nachbehandlung mit den Feststoffen vorteilhafterweise in einem Verrunder statt. Überraschenderweise konnte aus dem mit Niotensid und im Verrunder nachbehandelten stark klebrigen Produkt durch Zugabe von 11 Gew.-%, bezogen auf das nachbehandelte Produkt, Bicarbonat im Verrunder und eine weitere Verrundung von 10 Sekunden, ein Produkt erhalten werden, das ein Schüttgewicht von 716 g/l und eine Rieselzeit von nur 22 Sekunden aufwies.

Durch die aufgezeigten Nachbehandlungsmaßnahmen Verrundung, Behandlung mit flüssigen bis pastösen und/oder festen Inhaltsstoffen mit oder ohne Verrundung können eine Reihe von nachbehandelten Produkten mit guter Rieselfähigkeit und einer hohen Bandbreite des Schüttgewichts erhalten werden. Derart nachbehandelte Produkte weisen vorteilhafterweise ein Schüttgewicht von 380 g/l bis 950 g/l, vorzugsweise von 400 bis 750 g/l und insbesondere von 450 g/l bis 740 g/l, beispielsweise von 580 g/l bis 740 g/l auf. Besonders bevorzugt sind jedoch derartige Mittel mit Schüttgewichten von 450 bis 600 g/l, wobei Schüttgewichte bis 550 g/l ganz besondere Bevorzugung finden. Je nach Anwendungsbedarf kann das Schüttgewicht durch die entsprechenden Maßnahmen also eingestellt werden, ohne daß dabei die Rieselfähigkeit und die Korngrößenverteilung signifikant verschlechtert werden.

Die erfindungsgemäß hergestellten Mittel haben außerdem den Vorteil, daß sie schnell löslich sind.

Die direkten Sprühtrocknungsprodukte und/oder die oben beschriebenen nachbehandelten Produkte können mit weiteren Bestandteilen von Wasch- oder Reinigungsmitteln aufbereitet, insbesondere vermischt, werden, wobei es von Vorteil ist, daß Bestandteile zugemischt werden können, die der Sprühtrocknung nicht zugänglich sind. Aus dem breiten Stand der Technik ist allgemein bekannt, welche Inhaltsstoffe von Wasch- oder Reinigungsmitteln nicht der Sprühtrocknung zugänglich sind und welche Rohstoffe üblicherweise zugemischt werden. Es wird auf diese allgemeinen Literaturstellen verwiesen. Genauer ausgeführt werden nur Hochtemperatur-sensitive übliche Mischungsbestandteile von Wasch- oder Reinigungsmitteln, wie Bleichmittel auf Basis von Per-Verbindungen, Bleichaktivatoren und/oder Bleichkatalysatoren, Enzyme aus der Klasse Proteasen, Lipasen und Amylasen; beziehungsweise Bakterienstämme oder Pilze, Schauminhibitoren in gegebenenfalls granularer und/oder compoundierter Form, Parfüme, temperaturempfindliche Farbstoffe und dergleichen, die zweckmäßigerweise mit den zuvor getrockneten Zusammensetzungen und gegebenenfalls nachbehandelten Produkten vermischt werden.

Ebenfalls nachträglich zugemischt werden können UV-Absorber, die auf die behandelten Textilien aufziehen und die Lichtbeständigkeit der Fasern und/oder die Lichtbeständigkeit des sonstiger Rezepturbestandteile verbessern. Unter UV-Absorber sind organische Substanzen (Lichtschutzfilter) zu verstehen, die in der Lage sind, ultraviolette Strahlen zu absorbieren und die aufgenommene Energie in Form längerwelliger Strahlung, z.B. Wärme wieder abzugeben. Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, in 3-Stellung Phenylsubstituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet. Besondere Bedeutung haben Biphenyl- und vor allem Stilbenderivate wie sie beispielsweise in der EP 0728749 A beschrieben werden und kommerziell als Tinosorb^{®} FD oder Tinosorb^{®} FR ex Ciba erhältlich sind. Als UV-B-Absorber sind zu nennen 3-Benzylidencampher bzw. 3-Benzylidennorcampher und dessen Derivate, z.B. 3-(4-Methylbenzyliden)campher, wie in der EP 0693471 B1 beschrieben; 4-Aminobenzoesäurederivate, vorzugsweise 4-(Dimethylamino)benzoesäure-2-ethylhexylester, 4-(Dimethylamino)benzoesäure-2-octylester und 4-(Dimethylamino)benzoesäureamylester; Ester der Zimtsäure, vorzugsweise 4-Methoxyzimtsäure-2-ethylhexylester, 4-Methoxyzimtsäurepropylester, 4-Methoxyzimtsäureisoamylester, 2-Cyano-3,3-phenylzimtsäure-2-ethylhexylester (Octocrylene); Ester der Salicylsäure, vorzugsweise Salicylsäure-2-ethylhexylester, Salicylsäure-4-isopropylbenzylester, Salicylsäurehomomenthylester; Derivate des Benzophenons, vorzugsweise 2-Hydroxy-4-methoxybenzophenon, 2-Hydroxy-4-methoxy-4'-methylbenzophenon, 2,2'-Dihydroxy-4-methoxybenzophenon; Ester der Benzalmalonsäure, vorzugsweise 4-Methoxybenzmalonsäuredi-2-ethylhexylester; Triazinderivate, wie z.B. 2,4,6-Trianilino-(p-carbo-2'-ethyl-1'-hexyloxy)-1,3,5-triazin und Octyl Triazon, wie in der EP 0818450 A1 beschrieben oder Dioctyl Butamido Triazone (Uvasorb® HEB); Propan-1,3-dione, wie z.B. 1-(4-tert.Butylphenyl)-3-(4'methoxyphenyl)propan-1,3-dion; Ketotricyclo(5.2.1.0)decan-Derivate, wie in der EP 0694521 B1 beschrieben. Weiterhin geeignet sind 2-Phenylbenzimidazol-5-sulfonsäure und deren Alkali-, Erdalkali-, Ammonium-, Alkylammonium-, Alkanolammonium- und Glucammoniumsalze; Sulfonsäurederivate von Benzophenonen, vorzugsweise 2-Hydroxy-4-methoxybenzophenon-5-sulfonsäure und ihre Salze; Sulfonsäurederivate des 3-Benzylidencamphers, wie z.B. 4-(2-Oxo-3-bornylidenmethyl)benzol-sulfonsäure und 2-Methyl-5-(2-oxo-3-bornyliden)sulfonsäure und deren Salze.

Als typische UV-A-Filter kommen insbesondere Derivate des Benzoylmethans in Frage, wie beispielsweise 1-(4'-tert.Butylphenyl)-3-(4'-methoxyphenyl)propan-1,3-dion, 4-tert.-Butyl-4'-methoxydibenzoylmethan (Parsol 1789), 1-Phenyl-3-(4'-isopropylphenyl)-propan-1,3-dion sowie Enaminverbindungen, wie beschrieben in der DE 19712033 A1 (BASF). Die UV-A und UV-B-Filter können selbstverständlich auch in Mischungen eingesetzt werden. Neben den genannten löslichen Stoffen kommen für diesen Zweck auch unlösliche Lichtschutzpigmente, nämlich feindisperse, vorzugsweise nanoisierte Metalloxide bzw. Salze in Frage. Beispiele für geeignete Metalloxide sind insbesondere Zinkoxid und Titandioxid und daneben Oxide des Eisens, Zirkoniums, Siliciums, Mangans, Aluminiums und Cers sowie deren Gemische. Als Salze können Silicate (Talk), Bariumsulfat oder Zinkstearat eingesetzt werden. Die Oxide und Salze werden in Form der Pigmente bereits für hautpflegende und hautschützende Emulsionen und dekorative Kosmetik verwendet. Die Partikel sollten dabei einen mittleren Durchmesser von weniger als 100 nm, vorzugsweise zwischen 5 und 50 nm und insbesondere zwischen 15 und 30 nm aufweisen. Sie können eine sphärische Form aufweisen, es können jedoch auch solche Partikel zum Einsatz kommen, die eine ellipsoide oder in sonstiger Weise von der sphärischen Gestalt abweichende Form besitzen. Die Pigmente können auch oberflächenbehandelt, d.h. hydrophilisiert oder hydrophobiert vorliegen. Typische Beispiele sind gecoatete Titandioxide, wie z.B. Titandioxid T 805 (Degussa) oder Eusolex0 T2000 (Merck). Als hydrophobe Coatingmittel kommen dabei vor allem Silicone und dabei speziell Trialkoxyoctylsilane oder Simethicone in Frage. Vorzugsweise wird mikronisiertes Zinkoxid verwendet. Weitere geeignete UV-Lichtschutzfilter sind der Übersicht von P.Finkel in SÖFW-Journal 122, 543 (1996) zu entnehmen.

Die UV-Absorber werden üblicherweise in Mengen von 0;01 Gew.-% bis 5 Gew.-%, vorzugsweise von 0,03 Gew.-% bis 1 Gew.-%, eingesetzt. In Ausnahmefällen können sie auch in dem direkten Sprühtrocknungsprodukt enthalten sein.

Es können aber auch andere Bestandteile, beispielsweise sogenannte Sprenkel, welche sich durch ihre Farbe und/oder ihre Form von dem Aussehen der direkten und/oder nachbehandelten Sprühtrocknungsprodukte abheben, enthalten sein. Die Sprenkel können einmal ein ähnliches bis identisches Kornspektrum wie die direkten und/oder nachbehandelten Sprühtrocknungsprodukte sowie dieselbe Zusammensetzung, aber eine andere Farbe aufweisen. Ebenso ist es möglich, daß die Sprenkel dieselbe Zusammensetzung wie die direkten und/oder nachbehandelten Sprühtrocknungsprodukte aufweisen, nicht angefärbt sind, aber eine andere Form aufweisen. Letztendlich ist es aber bevorzugt, daß Sprenkel, welche dieselbe Zusammensetzung wie die direkten und/oder nachbehandelten Sprühtrocknungsprodukte aufweisen, sich von letzteren in der Farbe und gegebenenfalls zusätzlich in ihrer Form unterscheiden. In diesen Fällen sollen die Sprenkel lediglich dazu beitragen, das Aussehen der fertigen Wasch- oder Reinigungsmittel noch attraktiver zu gestalten.

In einer weiteren und durchaus bevorzugten Ausführungsform der Erfindung weisen allerdings die Sprenkel eine andere chemische Zusammensetzung auf als die direkten und/oder nachbehandelten Sprühtrocknungsprodukte. Gerade hier kann aufgrund einer anderen Farbe und/oder einer anderen Form der Endverbraucher darauf hingewiesen werden, daß bestimmte Inhaltsstoffe für bestimmte Zwecke, beispielsweise Bleich- oder Pflegeaspekte im Endprodukt enthalten sind. Diese Sprenkel können nicht nur kugelförmig bis stäbchenförmig sein, sie können auch ganz andere Figuren darstellen. An dieser Stelle wird auf die Offenbarung der internationalen Anmeldungen WO 97/08290 A1 und WO 00/23556 A1 hingewiesen.

Die zugemischten Sprenkel oder aber auch andere Inhaltsstoffe können beispielsweise sprühgetrocknet, agglomeriert, granuliert, pelletiert oder extrudiert sein. Im Hinblick auf Extrusionsverfahren wird hier insbesondere auf die Offenbarungen in dem europäischen Patent EP 0486592 B1 und die internationale Patentanmeldung WO 98/12299 A1 verwiesen. Da es ein Vorteil der direkten und/oder nacherfindungsgemäß nachbehandelten Sprühtrocknungsprodukte ist, daß sie eine hervorragende Lösegeschwindigkeit auch bei relativ kaltem Wasser von 30 °C beinhalten, ist es natürlich bevorzugt, diesen derartige weitere Inhaltsstoffe und/oder Rohstoffe zuzumischen, die ebenfalls eine hervorragende Lösegeschwindigkeit aufweisen. Daher werden in einer bevorzugten Ausführungsform der Erfindung Rohstoffe zugemischt, die nach der Offenbarung der internationalen Patentanmeldung WO 99/28433 A1 hergestellt wurden.

Bevorzugtes Endprodukt ist ein Wasch- oder Reinigungsmittel, daß mindestens ein direktes Sprühtrocknungsprodukt und/oder nachbehandeltes Produkt, insbesondere in Mengen von 5 bis 90 Gew.-%, sowie weitere zugemischte Bestandteile enthält. Obwohl das Schüttgewicht der fertig aufbereiteten Mittel auch höher sein kann, ist es doch bevorzugt, daß die so aufbereiteten Mittel ein Schüttgewicht von maximal 700 g/l und insbesondere darunter, beispielsweise von maximal 680 g/l oder sogar von maximal 650 g/l, aufweisen.

### Rieseltest/Trichtertest

Zur Bestimmung des Rieselverhaltens wurden jeweils 1 Liter der zu messenden Probe in einen an seiner Auslaufrichtung zunächst verschlossenen Pulvertrichter gefüllt und dann die Auslaufzeit der Proben gemessen. Die Auslaufzeit von trockenem Seesand nach Freigabe der Auslauföffnung (13 Sekunden) wurde als Referenzwert genommen.

### Klumptest

Hierzu wurden 15 ml des jeweiligen Mittels in einen 25 ml Meßzylinder abgemessen und in einen Edelstahlzylinder, der in einer Porzellanschale oder ähnlichen stand, überführt. Dann wurde ein Edelstahlstempel, ohne daß das Pulver zusammengedrückt wurde, in den Zylinder eingesetzt und mit einem Gewicht von 500 g belastet. Nach 30 Minuten wurde das Gewicht entfernt, der Zylinder angehoben und das Mittel mit dem Stempel herausgedrückt. Die Vergabe der Noten erfolgt prinzipiell folgendermaßen: Zerfällt der Preßling beim Herausdrücken, so wird der Klumptest-mit "0" benotet. Ansonsten wird auf die Schale mit dem Preßling ein Gefäß gesetzt, in das soviel Wasser gegeben wird, bis der Preßling zerbricht. Die benötigte Wassermenge in Gramm wird als Klumptestnote angegeben. Im Rahmen der vorliegenden Erfindung werden Noten von oberhalb als 30 als nicht akzeptabel gefunden und die Mittel als nicht mehr frei fließend angesehen.

### Bestimmung des Trockenrückstands

Zur Bestimmung des Trockenrückstands wird eine vorbestimmte Probenmenge des zu untersuchenden Produkts in einer Aluminiumschale in einem vorgeheizten Trockenschrank bei 130 °C 30 Minuten lang getrocknet. Der Quotient aus der Menge des Rückstands nach der Trocknung zur eingesetzten Probenmenge vor der Trocknung multipliziert mit 100 ergibt den Trockenrückstand in %. Die Differenz zu 100 gibt den Wert für die unter diesen Bedingungen weggetrocknete Feuchtigkeitsmenge an. Der Test wird mehrfach (etwa 3 bis 5mal) wiederholt und anschließend der Mittelwert für den Trockenrückstand ermittelt.

## Patentansprüche

1. Verfahren zur Herstellung eines feinkörnigen Wasch- oder Reinigungsmittels bestehend aus einem direkten Sprühtrocknungsprodukt, welches ein Schüttgewicht im Bereich von 220 g/l bis 500 g/l und einen Partikeldurchmesser d50 im Bereich von 0,12 mm bis 0,6 mm aufweist, **dadurch gekennzeichnet, daß** man
a) eine flüssige oder pastöse lösungsmittelhaltige, insbesondere wasserhaltige, Zusammensetzung auf eine Temperatur erhitzt, die über dem Siedepunkt des Lösungsmittels liegt, wobei der Wärmeeintrag direkt oder durch eine Kombination aus direktem und indirektem Wärmeeintrag erfolgt und wobei bei der direkten Wärmeleitung zum Erhitzen Wasserdampf eingesetzt wird, der unter Druck steht,
b) die erhitzte flüssige oder pastöse lösungsmittelhaltige, insbesondere wasserhaltige, Zusammensetzung unter Überdruck und bei einer Temperatur, die über dem Siedepunkt des Lösungsmittels, insbesondere Wasser, liegt, einer Zerstäubungsvorrichtung zuführt und
c) die erhitzte flüssige oder pastöse lösungsmittelhaltige, insbesondere wasserhaltige, Zusammensetzung unter Überdruck und bei einer Temperatur, die über dem Siedepunkt des Lösungsmittels, insbesondere des Wassers, liegt, mittels der Zerstäubungsvorrichtung in einen nicht unter Überdruck befindlichen Relaxationsraum zerstäubt.

2. Verfahren nach Anspruch 1, **dadurch gekennzeichnet, daß** die Zusammensetzung a) auf Temperaturen über 100 °C, insbesondere auf mindestens 130 °C und besonders bevorzugt auf mindestens 160 °C erhitzt wird.

3. Verfahren nach Anspruch 1 oder 2, **dadurch gekennzeichnet, daß** als Trocknungsgase Luft, Luft/Rauchgas-Gemische, Stickstoff und/oder überhitzter Wasserdampf eingesetzt werden.

4. Verfahren nach einem der Ansprüche 1 bis 3, **dadurch gekennzeichnet, daß** in der Trocknungsstufe ein Trockenrückstand von 94,5 bis 99,8 %, vorzugsweise von 95,2 bis 99,2 % und insbesondere von 96,0 bis 98,5 % erreicht wird.

5. Verfahren nach einem der Ansprüche 1 bis 4, **dadurch gekennzeichnet, daß** man das Verfahren unter Verwendung einer Vorrichtung zur Sprühtrocknung durchführt, welche
a) eine Zuführung für eine flüssige oder pastöse lösungsmittelhaltige, insbesondere wasserhaltige, Zusammensetzung,
b) Mittel zum Erhitzen der flüssigen oder pastösen lösungsmittelhaltigen, insbesondere wasserhaltigen, Zusammensetzung auf eine Temperatur, die über dem Siedepunkt des Lösungsmittels liegt, wobei der Wärmeeintrag direkt oder durch eine Kombination von direkt und indirekt wirkenden Mitteln erfolgt und wobei die Vorrichtung ein Mittel b) zur Direkteinleitung von unter Druck stehendem Wasserdampf vorsieht,
c) Mittel zum Transport der in b) erhitzten flüssigen oder pastösen lösungsmittelhaltigen, insbesondere wasserhaltigen, Zusammensetzung unter Überdruck und bei einer Temperatur, die über dem Siedepunkt des Lösungsmittels liegt,
d) Mittel zur Zerstäubung der in b) erhitzten und in c) unter Überdruck transportierten flüssigen oder pastösen lösungsmittelhaltigen, insbesondere wasserhaltigen, Zusammensetzung bei einer Temperatur, die über dem Siedepunkt des Lösungsmittels, insbesondere Wasser, liegt sowie
e) einen nicht unter Überdruck befindlichen Relaxationsraum, der die mittels d) zerstäubte Zusammensetzung aufnimmt,
aufweist.

6. Verfahren nach Anspruch 5, **dadurch gekennzeichnet, daß** das Mittel b) ein Wärmetauscher, insbesondere ein Wärmetauscher mit Wandbelag-Abreinigungseinrichtungen ist.

7. Verfahren nach Anspruch 5, **dadurch gekennzeichnet, daß** die Vorrichtung ein Mittel b) zur Direkteinleitung von unter Druck stehendem Wasserdampf, welches nach dem Venturi-Prinzip arbeitet, vorsieht.

8. Verfahren nach Anspruch 7, **dadurch gekennzeichnet, daß** eine Direkteinleitung von Wasserdampf mit einem Druck des Dampfs von 20 bis 75 bar erfolgt.

9. Verfahren nach einem der Ansprüche 1 bis 8, **dadurch gekennzeichnet, daß** die Teilchengröße des direkten Sprühtrocknungsprodukts im Rahmen der üblichen produktionstechnischen Genauigkeit durch die Tropfengröße des Sprühstrahls eingestellt wird.

10. Verfahren nach einem der Ansprüche 1 bis 9, **dadurch gekennzeichnet, daß** das direkte Sprühtrocknungsprodukt in einem Verrunder, vorzugsweise nicht länger als 4 Minuten, nachbehandelt wird.

11. Verfahren nach einem der Ansprüche 1 bis 10, **dadurch gekennzeichnet, daß** das direkte Sprühtrocknungsprodukt vor dem Verrunden mit nichtionischen Tensiden, Parfüm und/oder Schauminhibitoren bzw. Zubereitungsformen, welche diese Inhaltsstoffe enthalten, vorzugsweise mit Mengen bis zu 20 Gew.-% Aktivsubstanz, insbesondere mit Mengen von 2 bis 18 Gew.-% Aktivsubstanz, jeweils bezogen auf das nachbehandelte Produkt, in an sich üblicher Weise, vorzugsweise in einem Mischer, nachbehandelt wird.

12. Verfahren nach einem der Ansprüche 1 bis 11, **dadurch gekennzeichnet, daß** das direkte Sprühtrocknungsprodukt mit einem Feststoff, beispielsweise Kieselsäuren, Zeolithe, Carbonate, Bicarbonate und/oder Sulfate, Citrate, Harnstoff oder Mischungen aus zwei oder mehreren der genannten Bestandteile, insbesondere in Mengen von 2 bis 15 Gew.-%, bezogen auf das nachbehandelte Produkt, im Mischer oder vorteilhafterweise im Verrunder abgepudert wird.

## Claims

1. Method of producing a fine-grained detergent or cleaning product consisting of a direct spray drying product which has an apparent weight in the range from 220 g/l to 500 g/l and a particle diameter d50 in the range from 0.12 mm to 0.6 mm, **characterized in that**
a) a liquid or pasty, solvent-containing, particularly water-containing, composition is heated to a temperature above the boiling point of the solvent, the input of heat taking place directly or by a combination of direct and indirect heat input and, in the case of direct heat conduction, pressurized steam being used for heating,
b) the heated liquid or pasty, solvent-containing, particularly water-containing, composition is supplied to an atomizing device under overpressure and at a temperature above the boiling point of the solvent, particularly water, and
c) the heated liquid or pasty, solvent-containing, particularly water-containing, composition, under overpressure and at a temperature above the boiling point of the solvent, particularly of the water, is atomized by means of the atomizing device into a relaxation space, which is not under overpressure.

2. Method according to Claim 1, **characterized in that** the composition is heated a) to temperatures above 100°C, in particular to at least 130°C, and with particular preference to at least 160°C.

3. Method according to Claim 1 or 2, **characterized in that** air, air/flue gas mixtures, nitrogen and/or superheated steam are used as drying gases.

4. Method according to one of Claims 1 to 3, **characterized in that** in the drying stage a dry residue of from 94.5 to 99.8%, preferably from 95.2 to 99.2%, and in particular from 96.0 to 98.5% is attained.

5. Method according to one of Claims 1 to 4, **characterized in that** the method is carried out using a spray drying apparatus which comprises
a) a feedline for a liquid or pasty, solvent-containing, particularly water-containing, composition,
b) means for heating the liquid or pasty, solvent-containing, particularly water-containing, composition to a temperature above the boiling point of the solvent, the input of heat taking place directly or by combination of direct and indirect means and the apparatus providing a means b) for the direct introduction of pressurized steam,
c) means for transporting the liquid or pasty, solvent-containing, particularly water-containing, composition, heated in b), under overpressure and at a temperature above the boiling point of the solvent,
d) means for atomizing the liquid or pasty, solvent-containing, particularly water-containing, composition heated in b) and transported under overpressure in c), at a temperature above the boiling point of the solvent, particularly water, and
e) a relaxation space which is not under overpressure, and which accommodates the composition atomized by means of d).

6. Method according to Claim 5, **characterized in that** the means b) is a heat exchanger, in particular a heat exchanger having wall coating removal devices.

7. Method according to Claim 5, **characterized in that** the apparatus provides a means b) for the direct introduction of pressurized steam, said means operating in accordance with the Venturi principle.

8. Method according to Claim 7, **characterized in that** direct introduction of steam takes place with a steam pressure of from 20 to 75 bar.

9. Method according to one of Claims 1 to 8, **characterized in that** the particle size of the direct spray drying product is adjusted, within the bounds of normal production accuracy, by the droplet size of the spray jet.

10. Method according to one of Claims 1 to 9, **characterized in that** the direct spray drying product is aftertreated in a rounder, preferably for not longer than 4 minutes.

11. Method according to one of Claims 1 to 10, **characterized in that** the direct spray drying product is aftertreated, prior to rounding, with nonionic surfactants, fragrance and/or foam inhibitors or preparation forms comprising these ingredients, preferably with amounts up to 20% by weight of active substance, in particular with amounts of from 2 to 18% by weight of active substance, based in each case on the aftertreated product, in conventional manner, preferably in a mixer.

12. Method according to one of Claims 1 to 11, **characterized in that** the direct spray drying product is powdered with a solid, for example silicas, zeolites, carbonates, bicarbonates, and/or sulphates, citrates, urea or mixtures of two or more of the said constituents, in particular in amounts of from 2 to 15% by weight, based on the aftertreated product, in a mixer or, advantageously, in a rounder.

## Revendications

1. Procédé pour préparer un agent de lavage ou de nettoyage à grain fin, constitué d'un produit direct de séchage par pulvérisation, lequel présente une densité en vrac dans la plage de 220 g/l à 500 g/l et un diamètre de particule d50 dans la plage de 0,12 mm à 0,6 mm, **caractérisé en ce que**,
a) l'on chauffe une composition liquide ou pâteuse, contenant un solvant, en particulier contenant de l'eau, à une température qui se trouve au-dessus du point d'ébullition du solvant, l'apport de chaleur se réalisant directement ou par l'intermédiaire d'une combinaison d'un apport de chaleur direct et indirect, et de la vapeur d'eau étant mise en oeuvre dans la conduction thermique directe pour chauffer, laquelle se trouve sous pression,
b) l'on alimente un dispositif de pulvérisation avec la composition liquide ou pâteuse, contenant un solvant, en particulier contenant de l'eau, chauffée sous une surpression et à une température qui se trouve au-dessus du point d'ébullition du solvant, en particulier de l'eau, et
c) l'on pulvérise la composition liquide ou pâteuse, contenant un solvant, en particulier contenant de l'eau, chauffée sous une surpression et à une température qui se trouve au-dessus du point d'ébullition du solvant, en particulier de l'eau, au moyen du dispositif de pulvérisation dans un espace de relaxation ne se trouvant pas sous une surpression.

2. Procédé selon la revendication 1, **caractérisé en ce que** la composition a) est chauffée à des températures supérieures à 100°C, en particulier d'au moins 130°C, et de manière particulièrement préférée d'au moins 160°C.

3. Procédé selon la revendication 1 ou 2, **caractérisé en ce que** l'on met en oeuvre en tant que gaz de séchage, de l'air, des mélanges air/gaz de fumée, de l'azote et/ou de la vapeur d'eau surchauffée.

4. Procédé selon l'une quelconque des revendications 1 à 3, **caractérisé en ce que**, dans l'étape de séchage, on atteint un résidu sec de 94,5 à 99,8%, de préférence de 95,2 à 99,2%, et en particulier de 96,0 à 98,5%.

5. Procédé selon l'une quelconque des revendications 1 à 4, **caractérisé en ce que**, on réalise le procédé en employant un dispositif pour le séchage par pulvérisation, lequel présente
a) une alimentation pour une composition liquide ou pâteuse, contenant un solvant, en particulier contenant de l'eau,
b) un moyen pour chauffer la composition liquide ou pâteuse, contenant un solvant, en particulier contenant de l'eau, à une température qui se trouve au-dessus du point d'ébullition du solvant, l'apport de chaleur étant réalisé directement ou par l'intermédiaire d'une combinaison d'agent à effets directs et indirects, et le dispositif prévoyant un moyen b) pour introduire directement la vapeur d'eau se trouvant sous pression,
c) un moyen pour transporter la composition liquide ou pâteuse, contenant un solvant, en particulier contenant de l'eau, chauffée dans b) sous surpression et à une température qui se trouve au-dessus du point d'ébullition du solvant,
d) un moyen pour pulvériser la composition liquide ou pâteuse, contenant un solvant, en particulier contenant de l'eau, chauffée dans b), transportée sous surpression dans c), à une température qui se trouve au-dessus du point d'ébullition du solvant, en particulier de l'eau, ainsi que
e) un espace de relaxation ne se trouvant pas sous surpression, qui reçoit la composition pulvérisée au moyen de d).

6. Procédé selon la revendication 5, **caractérisé en ce que** le moyen b) est un échangeur de chaleur, en particulier un échangeur de chaleur avec des dispositifs pour nettoyer les dépôts sur parois.

7. Procédé selon la revendication 5, **caractérisé en ce que** le dispositif prévoit un moyen b) pour conduire directement la vapeur d'eau se trouvant sous pression, lequel fonctionne d'après le principe de Venturi.

8. Procédé selon la revendication 7, **caractérisé en ce qu'**une conduite directe de la vapeur d'eau se réalise à une pression de la vapeur de 20 à 75 bars.

9. Procédé selon l'une quelconque des revendications 1 à 8, **caractérisé en ce que** la taille de particule du produit direct de séchage par pulvérisation est ajustée par la taille des gouttelettes du jet de pulvérisation dans le cadre de la précision habituelle dans les techniques de production.

10. Procédé selon l'une quelconque des revendications 1 à 9, **caractérisé en ce que** le produit direct de séchage par pulvérisation est traité par la suite dans un sphéroniseur, de préférence pendant pas plus de 4 minutes.

11. Procédé selon l'une quelconque des revendications 1 à 10, **caractérisé en ce que** le produit direct de séchage par pulvérisation avant la sphéronisation est post-traité d'une manière habituelle en elle-même, de préférence dans un mélangeur, par des tensio-actifs non ioniques, du parfum et/ou des agents anti-mousse, ou des formes de préparation qui contiennent ces ingrédients, de préférence par des quantités allant jusqu'à 20% en poids de substance active, en particulier par des quantités de 2 à 18% en poids de substance active, à chaque fois par rapport au produit post-traité.

12. Procédé selon l'une quelconque des revendications 1 à 11, **caractérisé en ce que** le produit direct de séchage par pulvérisation est poudré avec un solide, par exemple les acides siliciques, les zéolithes, les carbonates, les bicarbonates et/ou les sulfates, les citrates, l'urée, ou des mélanges de deux ou plusieurs des composants cités, en particulier en des quantités de 2 à 15% en poids par rapport au produit post-traité, dans le mélangeur ou de préférence dans le sphéroniseur.
